# EUROPÄISCHE PATENTSCHRIFT

(11) **EP 2 550 281 B1**
(45) Veröffentlichungstag und Bekanntmachung des Hinweises auf die Patenterteilung: **25.06.2014**
(21) Anmeldenummer: 11706841.1
(22) Anmeldetag: 08.03.2011
(51) Int. Cl.: C07F 7/08

(54) **SILAOXACYCLEN**
SILAOXACYCLES
DERIVES CYCLIQUE SILA-OXA

(30) Priorität: 22.03.2010 DE 102010003108
(43) Veröffentlichungstag der Anmeldung: 30.01.2013
(73) Patentinhaber: Wacker Chemie AG, 81737 München (DE)
(72) Erfinder: DAISS, Jürgen Oliver, 81373 München (DE); SCHMID, Stefan, 80687 München (DE)
(74) Vertreter: Fritz, Helmut
(86) Internationale Anmeldenummer: PCT/EP2011/053487
(87) Internationale Veröffentlichungsnummer: WO 2011/117071

(56) Entgegenhaltungen:
- US-A- 2 898 346
- SIMMLER WALTER ET AL: "Zur Kenntnis von funktionellen Si-Heterocyclen, VII. Sila-dioxane, dioxolane und -trioxane // Functional Si-heterocycles. VII. Siladioxanes, siladioxolanes, and silatrioxanes", CHEMISCHE BERICHTE, VERLAG CHEMIE GMBH. WEINHEIM, DE, Bd. 99, Nr. 4, 1. April 1966 (1966-04-01), Seiten 1368-1383, XP009146597, ISSN: 0009-2940, DOI: DOI:10.1002/CBER.19660990446 [gefunden am 2006-01-21] in der Anmeldung erwähnt

## Beschreibung

Die vorliegende Erfindung betrifft ein Verfahren zur Herstellung von Silaoxacyclen, die Struktureinheiten aufweisen, bei denen Silicium- und Sauerstoffatom via eine CH₂-Gruppe miteinander verbunden sind, und neue Silaoxacyclen.

Silaoxacyclen, bei denen Silicium- und Sauerstoffatom *via* eine CH₂-Gruppe miteinander verbunden sind, sind vorzügliche Reagenzien für die Herstellung von (Hydroxymethyl)polysiloxanen durch Terminierung von Siliconölen nach folgender Reaktionsgleichung:

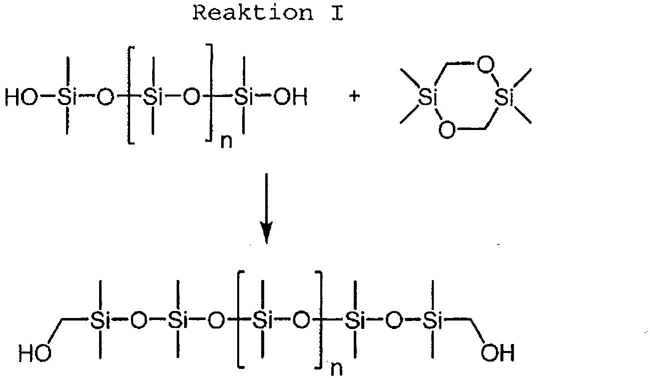

Da der als Terminierungsreagenz eingesetzte Silaoxacyclus als cyclische Verbindung keine Endgruppen u.ä. aufweist, die bei der Reaktion abgespalten werden müssen, handelt es sich bei der Reaktion I um eine glatte Additionsreaktion ohne Kondensationsprodukte, die hernach entfernt werden müssten. Das so hergestellte, mit Si-CH₂-OH-Gruppen terminierte Carbinolöl ist vorzüglich geeignet für die Herstellung von "AA-BB"-Polymeren, zum Beispiel durch Umsetzung mit Diisocyanaten, vorausgesetzt, die Terminierung gelingt quantitativ, da jede Si-OH-Gruppe, die nicht mit einer Si-CH₂-OH-Gruppe terminiert wird, bei der nachfolgenden Herstellung von AA-BB-Polymeren mittels Diisocyanaten zu einer Si-O-C(O)-NH-Gruppe umgesetzt wird, deren Si-O-Bindung eine hydrolyseempfindliche Bruchstelle darstellt. Die Terminierung gelingt umso glatter, je reiner der eingesetzte Silaoxacyclus ist.

Die Fachliteratur beschreibt verschiedene Methoden zur Herstellung von Silaoxacyclen, bei denen Silicium- und Sauerstoffatom via eine CH₂-Gruppe miteinander verbunden sind.

So wurde die Herstellung von 2,2,5,5-Tetramethyl-1,4-dioxa-2,5-disilacyclohexan durch Erhitzen von 1,3-Bis(hydroxymethyl)-1,1,3,3-tetramethyldisiloxan über Calciumoxid in US 2,898,346 und Journal of Organic Chemistry 1960, Bd. 25, S. 1637-1640 beschrieben. Dieses Verfahren liefert das Produkt jedoch nur in 40-60% Ausbeute, erfordert den Einsatz von Calciumoxid in einer Menge von rund einem Viertel der Reaktionsmasse und liefert ein unreines Produkt, erkennbar an dem breiten Siedebereich der Produktfraktion und an der berichteten Elementaranalyse, die deutlich von den theoretischen Werten abweicht. Die schlechte Reinheit des so hergestellten Produkts wird bestätigt durch Chemische Berichte 1966, Band 99, S. 1368-1383 (s. dort in Fussnote 10 auf S. 1373).

In Chemische Berichte 1966, Band 99, S. 1368-1383 ist ein Verfahren zur Herstellung von 2,2,5,5-Tetramethyl-1,4-dioxa-2,5-disilacyclohexan beschrieben, indem (Acetoxymethyl)ethoxydi-methylsilan durch Erhitzen mit einem großen Überschuss an Methanol in Gegenwart von *p*-Toluolsulfonsäure (*p*-TsOH) zu Ethoxy(hydroxymethyl)dimethylsilan umgesetzt, das Primärprodukt neutralisiert und dann langsam unter Ethanolabspaltung destilliert wurde (Reaktion II):

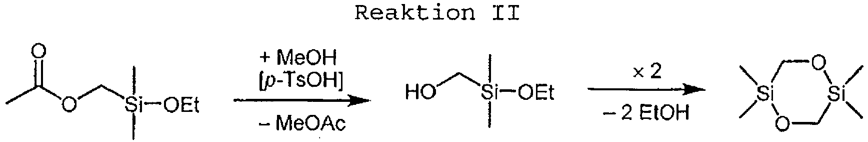

Dieses Verfahren ist jedoch unwirtschaftlich, da es nur schlechte Raumzeitausbeuten ermöglicht, da mehr als 2/3 des Reaktionsvolumens aus Methanol bestehen und da für die Ethanolabspaltung zur Unterdrückung von Nebenproduktbildung die Einhaltung einer Temperatur von weniger als 100 °C erforderlich ist, so dass das Ethanol, wie die zitierte Stelle explizit berichtet, nur langsam abgespalten werden kann. Werden die Reaktionsbedingungen nicht strikt kontrolliert, so bilden sich unter den sauren Reaktionsbedingungen ethergruppenhaltige Verbindungen mit der Struktureinheit Si-CH₂-O-CH₂-Si, die das Produkt verunreinigen. Obendrein muss eine Zwischenstufe (hier: Ethoxy(hydroxymethyl)dimethylsilan) durchlaufen werden, was einen zusätzlichen Arbeitsschritt darstellt. Ferner ist in Chemische Berichte 1966, Band 99, S. 1368-1383 beschrieben, dass nach dem Abdestillieren des Methylacetats ein Neutralisationsschritt mit Kaliumhydroxid und CO₂ durchgeführt wird, bevor das eigentliche Produkt, das 2,2,5,5-Tetramethyl-2,5-disila-1,4-dioxan, gewonnen wird, was das Verfahren zusätzlich langwierig macht. Die Stelle Organosilicon Chemistry, Scientific Communications, Prague, 1965, S. 120-124 zeigt prinzipiell denselben Reaktionsweg in Form von Reaktionsgleichungen, enthält jedoch keinerlei Handlungs- oder Verfahrensanweisungen, die es Fachleuten ermöglichen würden, die dort gezeigte Reaktionssequenz nachzuvollziehen oder ein Produkt zu isolieren. Als Katalysator wird in dieser Stelle ebenfalls p-Toluolsulfonsäure benannt, weshalb das Problem der Etherbildung als Nebenprodukt bei diesem Reaktionsweg zwangsläufig ebenfalls auftreten muss. 2,2,5,5-Tetramethyl-1,4-dioxa-2,5-disilacyclohexan, 2,5-Di-methyl-2,5-diphenyl-1,4-dioxa-2,5-disilacyclohexan und 2,2,5,5-Tetraphenyl-1,4-dioxa-2,5-disilacyclohexan wurden durch Kondensation von (Hydroxymethyl)dimethylsilan, (Hydroxymethyl)-methylphenylsilan bzw. (Hydroxymethyl)diphenylsilan unter Wasserstoffabspaltung hergestellt (Zeitschrift für Naturforschung B, 1983, Band 38, S. 190-193). Da sich die reagierenden COH-und SiH-Gruppen in derselben Verbindung befinden und damit während der Eduktlagerung nicht separierbar sind, kann das als Edukt verwendete Siliciumhydrid jedoch jederzeit und unkontrolliert diese Reaktion starten, wenn es zum Beispiel mit katalytischen Spuren von Basen in Kontakt kommt. Die Herstellung von größeren Mengen an Silanen, die sowohl eine Si-H-Gruppe als auch eine Carbinolgruppe aufweisen, ist daher sehr gefährlich und großtechnisch nicht oder nur mit hohem Aufwand realisierbar.

Ferner sind in der Fachliteratur verschiedene Methoden zur Umesterung von Silanen beschrieben, die eine (Acyloxyalkyl)-gruppe tragen.

In DE 1 251 961 B ist die Herstellung cyclischer Silanverbindungen beschrieben, deren Struktur sich durch die Formel *-O-R'-SiR"₂-* wiedergeben lässt, wobei * die Stelle des Ringschlusses und R' ein zweiwertiger Kohlenwasserstoffrest ist, der das Silicium- und Sauerstoffatom über mindestens drei Kohlenstoffatome verbindet. Dabei wird ein Ester der Struktur Acyl-O-R'-SiR"₂-OR"' einer Umesterungsreaktion mit einem Alkohol unterworfen. Werden die so hergestellten Verbindungen der Struktur *-O-R'-SiR"₂-* analog Reaktion I mit Siliconölen umgesetzt, so entstehen jedoch Produkte mit vergleichsweise hohem organischem Anteil, da R' mindestens drei Kohlenstoffatome aufweist, was hinsichtlich Eigenschaften wie Flammschutz der Folgeprodukte nachteilig ist.

Die Firma Union Carbide hat in mehreren Anmeldungen (siehe EP 129 121 A1, EP 120 115 A1, EP 107 211 A2, EP 106 062 A2, EP 93 806 A1, EP 73 027 A2 und EP 49 155 A2) die Herstellung von acyclischen Produkten beschrieben, die Wiederholungseinheiten der Struktur *[O-R'-SiR"₂-]ₚ* aufweisen (* = Endgruppen oder nicht definierte Gruppen). Dabei wird ein Ester der Struktur Acyl-O-R'-SiR"₂-OR"' einer Umesterungsreaktion mit Abspaltung eines Esters Acyl-OR"', der aus dem Reaktionsgemisch herausdestilliert wird, unterworfen, wobei die Kettenlängenverteilung p des Produkts durch den Grad, bis zu dem die Umesterung getrieben wird, gesteuert wird, und wobei als Regler zur Begrenzung des Umesterungsgrades hochsiedende Ester, wie Ethylbenzoat, Methylbenzoat oder Ethyllaurat zugesetzt werden können, die eine Blockierung der *-Endgruppen des Produkts bewirken, indem der Acylrest und der Alkoxyrest des zugesetzten hochsiedenden Esters als *-Endgruppen ins Produkt eingebaut werden. Die Herstellung von cyclischen Verbindungen, die beispielsweise durch Destillation isoliert oder aufgereinigt werden könnten, wurde jedoch nicht beschrieben.

Die Herstellung von Homokondensaten von (Hydroxymethyl)silanen ist ferner in DE 44 07 437 A1 beschrieben. Die Schrift beschreibt jedoch nur, wie man durch Umesterung von (Acyloxy-methyl)silanen mit Alkoholen zu einem inhomogenen Gemisch linearer oder verzweigter Kondensate gelangt.

Gegenstand der Erfindung ist ein Verfahren zur Herstellung von Silaoxacyclen der allgemeinen Formel I, 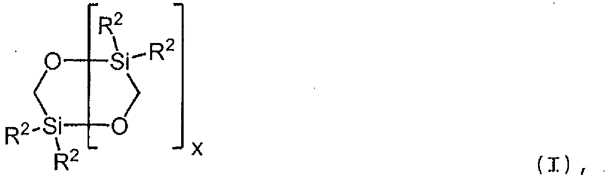 bei dem Verbindungen der allgemeinen Formel II

R¹-C(=O)-[O-CH₂-Si(R²)₂]ₙ-OR³ (II),

in Gegenwart von Katalysator, der ausgewählt wird aus einem Metall oder einer Verbindung eines Metalls der Gruppen 3 bis 15 und den Lanthanoiden des Periodensystems der Elemente nach IUPAC-Notation, umgesetzt werden, wobei
x ganzzahlige Werte größer oder gleich 0,
n ganzzahlige Werte größer oder gleich 1,
R¹ Wasserstoff oder einen unsubstituierten oder mit einer oder mehreren Gruppen Q¹ substituierten Kohlenwasserstoffrest, der durch ein oder mehrere Heteroatome unterbrochen sein kann, oder eine Gruppe OR³,
R² Wasserstoff oder einen unsubstituierten oder mit einer oder mehreren Gruppen Q¹ substituierten Kohlenwasserstoffrest, der durch ein oder mehrere Heteroatome unterbrochen sein kann, oder eine Gruppe OR⁴,
R³ einen unsubstituierten oder mit einer oder mehreren Gruppen Q¹ substituierten Kohlenwasserstoffrest, der durch ein oder mehrere Heteroatome unterbrochen sein kann,
R⁴ einen unsubstituierten oder mit einer oder mehreren Gruppen Q¹ substituierten Kohlenwasserstoffrest, der durch ein oder mehrere Heteroatome unterbrochen sein kann, oder eine Gruppe CH₂Si(R⁵)_{3-q}{OCH₂Si(R⁵)₃₋ᵣ[OCH₂Si(R⁵)₂(OR³)]ᵣ}_{q} bedeuten,
q ganzzahlige Werte ausgewählt aus 0, 1, 2 oder 3,
r ganzzahlige Werte ausgewählt aus 0, 1, 2 oder 3,
R⁵ Wasserstoff oder einen unsubstituierten oder mit einer oder mehreren Gruppen Q¹ substituierten Kohlenwasserstoffrest, der durch ein oder mehrere Heteroatome unterbrochen sein kann, oder eine Gruppe OR³, und
Q¹ einen einbindigen, zweibindigen oder dreibindigen heteroatomhaltigen Rest bedeuten,
wobei R¹, R², R³, R⁴, R⁵ und Q¹ miteinander verbunden sein können, so dass sich ein oder mehrere Ringe bilden.

Das Verfahren ist effizient und ökonomisch. Durch das Verfahren können die Silaoxacyclen der allgemeinen Formel I ohne weitere Reinigung in einer Reinheit zugänglich gemacht werden, die eine direkte Weiterverwendung, beispielsweise gemäß vorstehender Reaktion I, erlaubt.

Überraschenderweise wurde gefunden, dass die gewünschten Silaoxacyclen leicht in einem robusten Prozess und in hoher Reinheit hergestellt werden können, wenn Silane, die (Acyloxy-methyl)- und Alkoxygruppen aufweisen, auf bestimmte Weise einer Umesterung unterworfen werden.

Es können die Verbindungen der allgemeinen Formel II und die Katalysatoren jeweils in einem Gemisch oder als Reinstoff eingesetzt werden. Die Silaoxacyclen der allgemeinen Formel I können ebenfalls als Gemisch oder als Reinstoff erhalten werden. Gleiche oder verschiedene Verbindungen der allgemeinen Formel II oder gleiche oder verschiedene Katalysatoren können in mehreren Schritten nacheinander zugegeben werden.

Vorzugsweise wird mindestens eine Verbindung der allgemeinen Formel I aus dem Reaktionsgemisch isoliert. Das Isolieren der Verbindung der Formel I aus dem Reaktionsgemisch geschieht bevorzugt durch Destillation, wobei die Verbindung der allgemeinen Formel I als Destillat übergeht.

Bei dem Verfahren wird in der Regel ein Nebenprodukt der allgemeinen Formel III

R¹-C(=O)-OR³ (III),

ebenfalls abgetrennt, beispielsweise destillativ, wobei das Nebenprodukt der allgemeinen Formel III je nach Wahl der Reste R¹ und R³ als Destillat oder als Destillationsrückstand anfallen kann.
x nimmt vorzugsweise Werte von 1 bis 30, bevorzugt Werte von 1 bis 3, besonders bevorzugt den Wert 1 an. x kann beispielsweise die Werte 1, 2, 3, 4, 5, 6, 7, 8, 9 oder 10 annehmen.
n nimmt vorzugsweise Werte von 1 bis 30, bevorzugt Werte von 1 bis 3, besonders bevorzugt den Wert 1 an. n kann beispielsweise die Werte 1, 2, 3, 4, 5, 6, 7, 8, 9 oder 10 annehmen.
R¹ ist beispielsweise ein Wasserstoffatom oder ein linearer oder verzweigter, gesättigter oder einfach oder mehrfach ungesättigter, cyclischer oder acyclischer oder mehrere Cyclen enthaltender Kohlenwasserstoffrest oder - wenn R¹ eine Gruppe OR³ bedeutet - Kohlenwasserstoffoxyrest. R¹ ist vorzugsweise ein Wasserstoffatom oder ein C₁-C₄₀ Alkylrest, ein C₆-C₄₀ Arylrest, ein C₇-C₄₀ Alkylarylrest oder ein C₇-C₄₀ Arylalkylrest. Bevorzugt ist R¹ ein Wasserstoffatom, ein C₁-C₂₀ Alkylrest, ein C₆-C₂₀ Arylrest, ein C₇-C₂₀ Alkylarylrest oder ein C₇-C₂₀ Arylalkylrest. Besonders bevorzugt ist R¹ ein Wasserstoffatom, ein C₁-C₁₂ Alkylrest, ein C₆-C₁₂ Arylrest, ein C₇-C₁₂ Alkylarylrest oder ein C₇-C₁₂ Arylalkylrest. R¹ enthält bevorzugt Null bis vier Heteroatome, insbesondere Null Heteroatome. R¹ ist bevorzugt unsubstituiert. Besonders bevorzugt besteht R¹ ausschließlich aus Kohlenstoff- und Wasserstoffatomen oder ist ein Wasserstoffatom. Beispiele für R¹ sind Wasserstoff, Methyl, Ethyl, *n*-Propyl, *iso*-Propyl, n-Butyl, *iso*-Butyl, *sec*-Butyl, *tert*-Butyl, n-Pentyl, *tert*-Pentyl, *n*-Hexyl, *n*-Heptyl, 1-Ethylpentyl, *n*-Octyl, *n*-Nonyl, n-Decyl, *n*-Undecyl, *n*-Tridecyl, *n*-Pentadecyl, n-Heptadecyl, *n*-Nonadecyl, Phenyl, Benzyl, 2-Methylphenyl, 3-Methylphenyl, 4-Methylphenyl.
R² ist beispielsweise ein Wasserstoffatom oder ein linearer oder verzweigter, gesättigter oder einfach oder mehrfach ungesättigter, cyclischer oder acyclischer oder mehrere Cyclen enthaltender Kohlenwasserstoffrest oder - wenn R² eine Gruppe OR⁴ bedeutet - Kohlenwasserstoffoxyrest. R² ist vorzugsweise ein Wasserstoffatom, ein C₁-C₄₀ Alkylrest, ein C₆-C₄₀ Arylrest, ein C₇-C₄₀ Alkylarylrest, ein C₇-C₄₀ Arylalkylrest, ein C₁-C₄₀ Alkoxyrest, ein C₂-C₄₀ (Alkoxy)alkoxyrest, ein C₆-C₄₀ Aryloxyrest, ein C₇-C₄₀ Arylalkoxyrest oder ein C₇-C₄₀ Alkylaryloxyrest. Bevorzugt ist R² ein C₁-C₂₀ Alkylrest, ein C₆-C₂₀ Arylrest, ein C₇-C₂₀ Alkylarylrest oder ein C₇-C₂₀ Arylalkylrest, ein C₁-C₂₀ Alkoxyrest, ein C₂-C₂₀ (Alkoxy)alkoxyrest, ein C₆-C₂₀ Aryloxyrest, ein C₇-C₂₀ Arylalkoxyrest oder ein C₇-C₂₀ Alkylaryloxyrest. Besonders bevorzugt ist R² ein C₁-C₁₂ Alkylrest, ein C₆-C₁₂ Arylrest, ein C₇-C₁₂ Alkylarylrest oder ein C₇-C₁₂ Arylalkylrest, ein C₁-C₁₂ Alkoxyrest, ein C₂-C₁₂ (Alkoxy)alkoxyrest, ein C₆-C₁₂ Aryloxyrest, ein C₇-C₁₂ Arylalkoxyrest oder ein C₇-C₁₂ Alkylaryloxyrest. R² enthält vorzugsweise Null bis vier Heteroatome, bevorzugt Null oder ein Heteroatome, besonders bevorzugt Null Heteroatome wenn R² ungleich OR⁴ ist, und besonders bevorzugt ein bis zwei Sauerstoffatome, insbesondere ein Sauerstoffatom, wenn R² gleich OR⁴ ist. R² ist bevorzugt unsubstituiert oder mit einer Alkoxygruppe substituiert, insbesondere unsubstituiert. Besonders bevorzugt besteht R² ausschließlich aus Kohlenstoff-und Wasserstoffatomen oder aus Kohlenstoff- und Wasserstoffatomen und einem Sauerstoffatom; in letzterem Fall ist dieses Sauerstoffatom bevorzugt an das Siliciumatom gebunden. Beispiele für R² sind Methyl, Ethyl, Vinyl, Allyl, Ethinyl, Propargyl, 1-Propenyl 1-Methylvinyl, Methallyl, Phenyl, Benzyl, *ortho*-, meta- oder *para*-Tolyl, Methoxy, Ethoxy, 2-Methoxy-ethoxy, 2-Methoxy-1-methylethoxy, n-Propoxy, *iso-*Propoxy, n-Butoxy, *iso*-Butoxy, *sec-*Butoxy, *tert*-Butoxy, *tert*-Pentoxy, n-Hexoxy, 2-Ethylhexoxy, *n*-Octoxy, *n*-Decoxy, *n*-Dodecoxy, n-Tetradecoxy, *n*-Octadecoxy, *n*-Eicosoxy, Phenoxy oder Benzyloxy.
R³ ist beispielsweise ein linearer oder verzweigter, gesättigter oder einfach oder mehrfach ungesättigter, cyclischer oder acyclischer oder mehrere Cyclen enthaltender Kohlenwasserstoffrest. R³ ist vorzugsweise ein C₁-C₄₀ Alkylrest, ein C₆-C₄₀ Arylrest, ein C₇-C₄₀ Alkylarylrest, ein C₇-C₄₀ Arylalkylrest oder ein C₂-C₄₀ (Alkoxy)alkylrest. Bevorzugt ist R³ ein C₁-C₂₀ Alkylrest, ein C₆-C₂₀ Arylrest, ein C₇-C₂₀ Alkylarylrest, ein C₇-C₂₀ Arylalkylrest oder ein C₂-C₂₀ (Alkoxy)alkylrest. Besonders bevorzugt ist R³ ein C₁-C₁₂ Alkylrest, ein C₆-C₁₂ Arylrest, ein C₇-C₁₂ A1-kylarylrest, ein C₇-C₁₂ Arylalkylrest oder ein C₂-C₁₂ (Alkoxy)-alkylrest. R³ enthält vorzugsweise Null bis vier Heteroatome, bevorzugt Null oder ein Heteroatom, besonders bevorzugt Null Heteroatome. R³ ist bevorzugt unsubstituiert oder mit einer Alkoxygruppe substituiert, insbesondere unsubstituiert. Besonders bevorzugt besteht R³ ausschließlich aus Kohlenstoff- und Wasserstoffatomen oder aus Kohlenstoff- und Wasserstoffatomen und einem Sauerstoffatom, wobei dieses Sauerstoffatom Teil einer Ethergruppe, das heißt an zwei Kohlenstoffatome gebunden, ist. Beispiele für R³ sind Methyl, Ethyl, 2-Methoxyethyl, 1-Methyl-2-methoxyethyl, *n*-Propyl, *iso*-Propyl, n-Butyl, iso-Butyl, *sec*-Butyl, *tert*-Butyl, *n*-Pentyl, *tert*-Pentyl, n-Hexyl, 2-Ethylhexyl, n-Octyl, *n*-Decyl, *n*-Dodecyl, *n*-Tetradecyl, *n*-Hexadecyl, *n*-Octadecyl, *n*-Eicosyl, Phenyl oder Benzyl.
R⁴ ist beispielsweise ein linearer oder verzweigter, gesättigter oder einfach oder mehrfach ungesättigter, cyclischer oder acyclischer oder mehrere Cyclen enthaltender Kohlenwasserstoffrest. R⁴ ist vorzugsweise ein C₁-C₄₀ Alkylrest, ein C₆-C₄₀ Arylrest, ein C₇-C₄₀ Alkylarylrest, ein C₇-C₄₀ Arylalkylrest oder ein C₂-C₄₀ (Alkoxy) alkylrest oder eine Gruppe CH₂Si(R⁵)_{3-q}{OCH₂Si(R⁵)₃-ᵣ[OCH₂Si(R⁵)₂(OR³)]ᵣ}_{q}. Vorzugsweise bedeutet mindestens eine Gruppe R⁵ eine Gruppe Gruppe OR³, wenn q oder r den Wert 0 bedeuten. Bevorzugt ist R⁴ ein C₁-C₂₀ Alkylrest, ein C₆-C₂₀ Arylrest, ein C₇-C₂₀ Alkylarylrest, ein C₇-C₂₀ Arylalkylrest oder ein C₂-C₂₀ (Alkoxy)alkylrest. Besonders bevorzugt ist R⁴ ein C₁-C₁₂ Alkylrest, ein C₆-C₁₂ Arylrest, ein C₇-C₁₂ Alkylarylrest, ein C₇-C₁₂ Arylalkylrest oder ein C₂-C₁₂ (Alkoxy)alkylrest. R⁴ enthält vorzugsweise Null bis vier Heteroatome, bevorzugt Null oder ein Heteroatom, besonders bevorzugt Null Heteroatome. R⁴ ist bevorzugt unsubstituiert oder mit einer Alkoxygruppe substituiert, insbesondere unsubstituiert. Besonders bevorzugt besteht R⁴ ausschließlich aus Kohlenstoff- und Wasserstoffatomen oder aus Kohlenstoff- und Wasserstoffatomen und einem Sauerstoffatom, wobei dieses Sauerstoffatom Teil einer Ethergruppe, das heißt an zwei Kohlenstoffatome gebunden, ist. Beispiele für R⁴ sind Methyl, Ethyl, 2-Methoxyethyl, 1-Methyl-2-methoxyethyl, n-Propyl, *iso-*Propyl, *n*-Butyl, *iso*-Butyl, *sec*-Butyl, *tert*-Butyl, *n-*Pentyl, *tert*-Pentyl, *n*-Hexyl, 2-Ethylhexyl, *n*-Octyl, *n*-decyl *n*-Dodecyl, *n*-Tetradecyl, *n*-Hexadecyl, *n*-Octadecyl, *n*-Eicosyl, Phenyl oder Benzyl.
R⁵ ist beispielsweise ein Wasserstoffatom oder ein linearer oder verzweigter, gesättigter oder einfach oder mehrfach ungesättigter, cyclischer oder acyclischer oder mehrere Cyclen enthaltender Kohlenwasserstoffrest oder - wenn **R⁵** eine Gruppe Gruppe OR³ bedeutet - Kohlenwasserstoffoxyrest. **R⁵** ist vorzugsweise ein Wasserstoffatom, ein C₁-C₄₀ Alkylrest, ein C₆-C₄₀ Arylrest, ein C₇-C₄₀ Alkylarylrest, ein C₇-C₄₀ Arylalkylrest, ein C₁-C₄₀ Alkoxyrest, ein C₂-C₄₀ (Alkoxy)alkoxyrest, ein C₆-C₄₀ Aryloxyrest, ein C₇-C₄₀ Arylalkoxyrest oder ein C₇-C₄₀ Alkylaryloxyrest. Bevorzugt ist **R⁵** ein C₁-C₂₀ Alkylrest, ein C₆-C₂₀ Arylrest, ein C₇-C₂₀ Alkylarylrest oder ein C₇-C₂₀ Arylalkylrest, ein C₁-C₂₀ Alkoxyrest, ein C₂-C₂₀ (Alkoxy)alkoxyrest, ein C₆-C₂₀ Aryloxyrest, ein C₇-C₂₀ Arylalkoxyrest oder ein C₇-C₂₀ Alkylaryloxyrest. Besonders bevorzugt ist **R⁵** ein C₁-C₁₂ Alkylrest, ein C₆-C₁₂ Arylrest, ein C₇-C₁₂ Alkylarylrest oder ein C₇-C₁₂ Arylalkyl-rest, ein C₁-C₁₂ Alkoxyrest, ein C₂-C₁₂ (Alkoxy)alkoxyrest, ein C₆-C₁₂ Aryloxyrest, ein C₇-C₁₂ Arylalkoxyrest oder ein C₇-C₁₂ Alkylaryloxyrest. **R⁵** enthält vorzugsweise Null bis vier Heteroatome, bevorzugt Null oder ein Heteroatome, besonders bevorzugt Null Heteroatome wenn **R⁵** ungleich OR³ ist, und besonders bevorzugt ein bis zwei Sauerstoffatome, insbesondere ein Sauerstoffatom, wenn **R⁵** gleich OR³ ist. **R⁵** ist bevorzugt unsubstituiert oder mit einer Alkoxygruppe substituiert, insbesondere unsubstituiert. Besonders bevorzugt besteht **R⁵** ausschließlich aus Kohlenstoff- und Wasserstoffatomen oder aus Kohlenstoff-und Wasserstoffatomen und einem Sauerstoffatom; in letzterem Fall ist dieses Sauerstoffatom bevorzugt an das Siliciumatom gebunden. Beispiele für **R⁵** sind Methyl, Ethyl, Vinyl, Allyl, Ethinyl, Propargyl, 1-Propenyl, 1-Methylvinyl, Methallyl, Phenyl, Benzyl, *ortho*-, meta- oder *para*-Tolyl, Methoxy, Ethoxy, 2-Methoxyethoxy, 2-Methoxy-1-methylethoxy, *n*-Propoxy, *iso*-Propoxy, n-Butoxy, *iso-*Butoxy, *sec-*Butoxy, *tert*-Butoxy, *tert*-Pentoxy, n-Hexoxy, 2-Ethylhexoxy, *n*-Octoxy, n-Decoxy, *n*-Dodecoxy, *n*-Tetradecoxy, *n*-Octadecoxy, *n*-Eicosoxy, Phenoxy oder Benzyloxy.
q nimmt vorzugsweise die Werte 0, 1 oder 2 an, bevorzugt 0 oder 1, besonders bevorzugt 0.
r nimmt vorzugsweise die Werte 0, 1 oder 2 an, bevorzugt 0 oder 1, besonders bevorzugt 0.

Q¹ ist vorzugsweise ein Halogenatom wie beispielsweise ein Fluor-, Chlor-, Brom- oder Iodatom, eine Kohlenwasserstoffoxygruppe wie beispielsweise eine C₁-C₄₀ Alkoxygruppe oder eine C₆-C₄₀ Aryloxygruppe, eine Acylgruppe wie beispielsweise eine aliphatische C₁-C₄₀ Acylgruppe oder eine aromatische C₇-C₄₀ Acylgruppe, eine Kohlenwasserstoffsulfidgruppe wie beispielsweise eine C₁-C₄₀ Alkylsulfidgruppe oder eine C₆-C₄₀ Arylsulfidgruppe, eine Cyanogruppe oder eine Nitrogruppe.

In einer besonders bevorzugten Kombination werden die oben definierten Gruppen so gewählt, dass der Rest **R¹** ein Wasserstoffatom, eine Methyl- oder eine Ethylgruppe ist, die Reste **R²** unabhängig voneinander Methyl-, Methoxy- oder Ethoxygruppen, insbesondere Methylgruppen sind, der Rest **R³** eine Methyl- oder Ethylgruppe ist, n ganzzahlige Werte von 1 bis 3, insbesondere 1, annimmt und x ganzzahlige Werte von 1 bis 3, insbesondere 1, annimmt.

Die Struktureinheit [O-CH₂-Si(R²)₂]ₙ in der allgemeinen Formel II kann linear oder verzweigt sein. Wurden beispielsweise als Verbindungen der allgemeinen Formel II Verbindungen mit R¹ = Me, R² = OMe und OR³ = OMe ausgewählt, so kann die allgemeine Formel II unter anderem folgende Strukturen darstellen:

n = 1: Me-C(=O)-[O-CH₂-Si(OMe)₂]-OMe

n = 2 (linear): Me-C(=O)-[O-CH₂-Si(OMe)₂-O-CH₂-Si(OMe)₂]-OMe

n = 3 (linear): Me-C (=O)-[O-CH₂-Si(OMe)₂-O-CH₂-Si(OMe)₂-O-CH₂-Si(OMe)₂]-OMe

n = 3 (verzweigt): Me-C(=O)-[O-CH₂-Si(O-CH₂-Si(OMe)₃)₂]-OMe

n = 4 (verzweigt, ausgewähltes Beispiel) : Me-C(=O)-[O-CH₂-Si(O-CH₂-Si(OMe)₃)₂-O-CH₂-Si(OMe)₂]-OMe,

wobei die in eckigen Klammern stehenden Struktureinheiten immer die Summenformel von [O-CH₂-Si(OMe)₂]ₙ mit dem jeweils angegebenen Wert für n aufweisen.

Verbindungen der allgemeinen Formel II sind beispielsweise für n = 1 herstellbar nach einem Prozess, wie er in Monatshefte für Chemie 2003, Band 134, S. 1081-1092 beschrieben ist (siehe den Abschnitt "General Procedure for the Synthesis of 1-4" in der Literaturstelle auf S. 1090); anstelle der dort beschriebenen Methacrylsäure kann auch eine andere Carbonsäure der Formel R¹COOH eingesetzt werden. Wird anstelle einer Carbonsäure ein trockenes Carbonsäuresalz eingesetzt, kann der dort beschriebene Azeotropierungsschritt übersprungen werden; wird eine Carbonsäure oder deren Salz eingesetzt, die keine unter radikalischen Bedingungen polymerisationsempfindliche Gruppe aufweist, kann auch der dort beschriebene Stabilisator (4,4'-Bis-methylen(2,6-di-*tert*-butylphenol)) weggelassen werden.

Verbindungen der allgemeinen Formel II, bei denen n Werte größer oder gleich 2 aufweist, können beispielsweise bei einem vorangegangenen Lauf der Ausführung des erfindungsgemäßen Verfahrens erzeugt werden, oder nach den in EP 129 121 A1, EP 120 115 A1, EP 107 211 A2, EP 106 062 A2, EP 93 806 A1, EP 73 027 A2 und EP 49 155 A2 beschriebenen Verfahren aus Verbindungen der allgemeinen Formel II, die für n den Wert 1 aufweisen, hergestellt werden.

Gegenstand der Erfindung sind ferner die Verbindungen der allgemeinen Formel IV 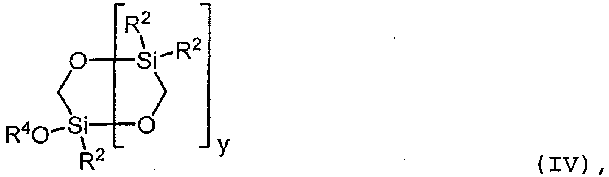 wobei **R²** und **R⁴** dieselben Bedeutungen annehmen können wie oben definiert und
y ganzzahlige Werte größer oder gleich 1 annehmen kann.

Die oben beschriebenen bevorzugten Bedeutungen für **R²** und **R⁴** gelten ebenfalls für die allgemeine Formel IV.

y nimmt vorzugsweise Werte von 1 bis 30, bevorzugt Werte von 1 bis 3, besonders bevorzugt den Wert 1 an. y kann beispielsweise die Werte 1, 2, 3, 4, 5, 6, 7, 8, 9 oder 10 annehmen.

Die Verbindungen der allgemeinen Formel IV stellen eine Auswahl von Verbindungen der allgemeinen Formel I dar, wobei in letzteren mindestens einer der Reste R² ausgewählt wird aus Gruppen OR⁴ und der Silaoxacyclus einen mindestens 6-gliedrigen Ring aufweist.

Das Verfahren wird in Gegenwart mindestens eines Metallkatalysators ausgeführt, wobei mindestens ein Metall ausgewählt wird aus den Gruppen 3 bis 15 (nach IUPAC-Notation) des Periodensystems der Elemente oder aus den Lanthanoiden, nämlich Cer, Praseodym, Neodym, Samarium, Europium, Gadolinium, Terbium, Dysprosium, Holmium, Erbium, Thulium, Ytterbium und Lutetium; Promethium ist weniger bevorzugt, da von diesem nur radioaktive Isotope existieren. Die leichtesten Metalle der Gruppen 3 bis 15 sind Aluminium, Scandium, Titan, Vanadium, Chrom, Mangan, Eisen, Cobalt, Nickel, Kupfer, Zink, Gallium und Germanium. Mittelschwere Metalle der Gruppen 3 bis 15 sind Yttrium, Zirconium, Niobium, Molybdän, Ruthenium, Rhodium, Palladium, Silber, Cadmium, Indium, Zinn und Antimon; Technetium ist weniger bevorzugt, da von diesem nur radioaktive Isotope existieren. Schwerere Metalle der Gruppen 3 bis 15 sind Lanthan, Hafnium, Tantal, Wolfram, Rhenium, Osmium, Iridium, Platin, Gold, Quecksilber, Thallium, Blei und Bismut.

Für die Abgrenzung der Metalle von den Nichtmetallen wird die Abgrenzung verwendet, wie sie im Chemie-Lexikon Römpp Online, Version 3.6, in dem Artikel zu dem Stichwort "Periodensystem" mit Bearbeitungsstand vom August 2006 dokumentiert ist.

Anders als p-Toluolsulfonsäure oder Schwefelsäure, die in Chemische Berichte 1966, Band 99, S. 1368-1383 als Katalysatoren beschrieben wurden, ist bei Verwendung von Metallkatalysatoren das Problem der Bildung von ethergruppenhaltigen Nebenprodukten (Struktureinheit: Si-CH₂-O-CH₂-Si) deutlich weniger ausgeprägt bis nicht vorhanden, was eine wesentlich einfachere und robustere Reaktionsführung hin zu einem reineren Produkt erlaubt. Anders als Calciumoxid liefern die gewählten Katalysatoren deutlich reinere Produkte, zudem in der Regel in deutlich besseren Ausbeuten.

Vorzugsweise werden Verbindungen von Metallen oder Metalle der Gruppen 4 bis 15 (nach IUPAC-Notation) des Periodensystems der Elemente eingesetzt, bevorzugt Metalle oder Verbindungen von Titan, Eisen, Cobalt, Nickel, Zink, Aluminium, Zinn, Blei und/oder Bismut, besonders bevorzugt Zinn oder seine Verbindungen oder Titan oder seine Verbindungen.

Die Metallkatalysatoren können beispielsweise als Präkatalysator, der die eigentliche aktive Katalysatorform erzeugen kann, in ihrer aktiven Form oder in einer Ruheform eingesetzt werden. Die Metalle können beispielsweise als Element eingesetzt werden, wobei durch Zusätze wie beispielsweise Oxidationsmittel die eigentlichen Katalysatoren *in situ* hergestellt werden können, oder die Oberflächen der Metalle, die beispielsweise oxidisch vorliegen können, können katalytisch wirken oder katalytisch wirkendes Metall oder seine Verbindungen an das Reaktionsgemisch abgeben, oder es können Verbindungen der Metalle eingesetzt werden. Als Metallverbindungen können beispielsweise eingesetzt werden Dimethylzinn-, Dibutylzinn-, Dioctylzinnoder Zinn(II)oxid, -dilaurat, -dineodecanoat, -dioctanoat, -di-2-ethylhexanoat, -diacetat, -di(acetylacetonat), -maleinat, - oxalat, -dichlorid, -hydrogenphosphit, -sulfid, -bis(octylmaleinat), Tetrabutyldilauroyloxydistannoxan, Butyl- oder Octylzinntrilaurat, -trineodecanoat, -trioctanoat, -tri-(2-ethyl-hexanoat), -triacetat, -tri(acetylacetonat), *1,5-maleinat, - trichlorid, *1,5-sulfid, -tris(octylmaleinat),-(chlorid)(dihydroxid), -säure, Tetrabutyl- oder Tetraoctylzinn, Titan(IV)-*iso*-propanolat, Titan(IV)-*n*-butanolat, Zinkricinoleat, -octa-noat, -di(acetylacetonat), -oxalat, Bismut (III)methansulfonat, -octanoat, -citrat, -oxid, Eisen(III)acetylacetonat, Cobalt(II)acetylacetonat, Nickel(II)acetylacetonat, Aluminium(III)-*iso*-propanolat oder Aluminiumlactat.

Die Katalysatoren werden in Stoffmengenäquivalenten von vorzugsweise mindestens 0,001 mmol, bevorzugt mindestens 0,01 mmol, besonders bevorzugt mindestens 0,1 mmol und von vorzugsweise höchstens 0,9 mol, bevorzugt höchstens 0,2 mol, besonders bevorzugt höchstens 0,1 mol, bezogen auf 1 Mol-Äquivalent an den im Verfahren in Summe eingesetzten Verbindungen der allgemeinen Formel II, eingesetzt. Bei geträgerten Katalysatoren wird dabei zur Berechnung ihrer Stoffmengenäquivalente die Stoffmenge an aktiven Zentren herangezogen. Die Stoffmenge an aktiven Zentren kann beispielsweise der Stoffmenge an Metallatomen der erfindungsgemäß für die Katalysatoren in Frage kommenden Metalle entsprechen.

Die Katalysatoren können beispielsweise in Lösung, in flüssiger Phase, in fester Phase, in Gasphase, in überkritischen Medien, in Substanz, flüssig, fest, gasförmig, homogen oder heterogen oder geträgert eingesetzt werden. Als Träger können beispielsweise Kieselgel oder Aluminiumoxid verwendet werden. Die Katalysatoren können in Kombination mit Cokatalysatoren, Promotoren, Moderatoren oder Kontaktgiften eingesetzt werden. Promotoren können die Wirkung von Katalysatoren verstärken. Kontaktgifte können die Wirkung von Katalysatoren dämpfen oder unerwünschte katalytische Wirkungen unterdrücken. Die Katalysatoren können beispielsweise direkt im Reaktionsgefäß eingesetzt werden oder das Reaktionsgemisch kann beispielsweise einfach oder wiederholt oder zirkulierend über die Katalysatoren gefahren werden.

Die Reaktion, durch die die Verbindungen der allgemeinen Formel II zu Verbindungen der allgemeinen Formel I reagieren, kann beispielsweise in der Gasphase, in flüssiger Phase, in fester Phase, im überkritischen Zustand, in überkritischen Medien, in Lösung oder in Substanz ausgeführt werden. Vorzugsweise wird das Verfahren in flüssiger Phase, in Lösung oder in Substanz ausgeführt, bevorzugt in flüssiger Phase, bevorzugt in Substanz, besonders bevorzugt in flüssiger Phase und in Substanz.

Das Verfahren kann über einen breiten Temperaturbereich, beispielsweise mindestens 0 °C, vorzugsweise mindestens 30 °C, bevorzugt mindestens 40 °C, besonders bevorzugt mindestens 50 °C und beispielsweise höchstens 400 °C, vorzugsweise höchstens 300 °C, bevorzugt höchstens 250 °C, besonders bevorzugt höchstens 200 °C ausgeführt werden.

Das Verfahren kann über einen breiten Druckbereich, beispielsweise mindestens 0,1 Pa, vorzugsweise mindestens 1 Pa, bevorzugt mindestens 10 Pa, besonders bevorzugt mindestens 100 Pa und beispielsweise höchstens 500 MPa, vorzugsweise höchstens 10 MPa, bevorzugt höchstens 1 MPa, besonders bevorzugt höchstens 500 kPa absolut ausgeführt werden. In einer besonders bevorzugten Ausführungsform wird das Verfahren bei atmosphärischem Druck ausgeführt, der je nach Umgebungsbedingungen in der Regel in einem Bereich zwischen 90 und 105 kPa absolut liegt.

Das Verfahren kann kontinuierlich oder diskontinuierlich ausgeführt werden. Bei diskontunierlicher Ausführungsform kann das Verfahren beispielsweise in einem Kaskadenreaktor oder in einem Rührkessel ausgeführt werden. Bei kontinuierlicher Ausführungsform kann das Verfahren beispielsweise in einem Rohr-, Verweilzeit-, Umlauf- oder Kaskadenreaktor oder einem dynamischen oder statischen Mischer ausgeführt werden.

Werden bei dem Verfahren Verbindungen der allgemeinen Formel II als Edukt eingesetzt, bei denen n einen bestimmten Wert oder bestimmte Werte aufweist, so können im Zuge der Ausführung des Verfahrens Verbindungen der allgemeinen Formel IIa auftreten

R¹-C(=O)-[O-CH₂-Si(R²)₂]ₘ-OR³ (IIa),

wobei R¹, R² und R³ die oben definierten Bedeutungen annehmen können und m ganzzahlige Werte größer oder gleich 1 annehmen kann, und in denen m Werte aufweist, die von den Werten für n, wie sie die jeweils eingesetzten Verbindungen der allgemeinen Formel II aufweisen, abweichen.

Werden bei dem Verfahren beispielsweise die besonders bevorzugten Verbindungen der allgemeinen Formel II als Edukt eingesetzt, bei denen n den Wert 1 aufweist, so können im Zuge der Ausführung des Verfahrens Verbindungen der allgemeinen Formel IIa auftreten, in denen m Werte größer oder gleich 2 aufweist.

m kann beispielsweise Werte von 2 bis 100 annehmen, wie beispielsweise 2, 3, 4, 5, 6, 7, 8, 9 oder 10. Werden Verbindungen der allgemeinen Formel II als Edukt eingesetzt, in denen n Werte ungleich 1 annimmt, so kann m beispielsweise auch den Wert 1 annehmen.

Die Struktureinheit [O-CH₂-Si(R²)₂]ₘ in der allgemeinen Formel IIa kann linear oder, wenn mindestens einer der Reste **R²** aus Resten der Struktur OR⁴ ausgewählt wurde, verzweigt sein, wobei **R⁴** die oben definierten Bedeutungen annehmen kann. Wurde beispielsweise als Verbindung der allgemeinen Formel II (Acetoxymethyl)trimethoxysilan gewählt (d.h. es wurde gewählt R¹ = Me, R² = OMe, OR³ = OMe, n = 1), so können im Zuge der Reaktion beispielsweise unter anderem die folgenden Verbindungen der allgemeinen Formel IIa auftreten,

m = 2 (linear): Me-C(=O)-[O-CH₂-Si(OMe)₂-O-CH₂-Si(OMe)₂]-OMe

m = 3 (linear): Me-C(=O)-[O-CH₂-Si(OMe)₂-O-CH₂-Si(OMe)₂-O-CH₂-Si(OMe)₂]-OMe

m = 3 (verzweigt) : Me-C (=O)-[O-CH₂-Si(O-CH₂-Si(OMe)₃)₂]-OMe

m = 4 (verzweigt, ausgewähltes Beispiel): Me-C(=O)-[O-CH₂-Si(O-CH₂-Si(OMe)₃)₂-O-CH₂-Si(OMe)₂]-OMe,

wobei die in eckigen Klammern stehenden Struktureinheiten immer die Summenformel von [O-CH₂-Si(OMe)₂]ₘ mit dem jeweils angegebenen Wert für m aufweisen.

Die Verbindungen der allgemeinen Formel IIa können im erfindungsgemäßen Verfahren weiter zu Verbindungen der allgemeinen Formel I umgesetzt werden. Dabei können gegebenenfalls Verbindungen der allgemeinen Formel III als Nebenprodukt entstehen.

Das Verfahren kann beispielsweise unter Rückfluss oder unter destillativen Bedingungen, gegebenenfalls unter Teilrücklauf, beispielsweise in einer Destillationsapparatur, einem Dünnschicht- oder Fallfilmverdampfer, gegebenenfalls an einer Kolonne mit Trennleistung, ausgeführt werden. Beispielsweise kann eine Verbindung oder können mehrere Verbindungen der allgemeinen Formeln I, II oder III aus dem Gemisch herausdestilliert werden.

In einer ersten bevorzugten Ausführungsform wird Verbindung der Formel III herausdestilliert und Verbindungen der allgemeinen Formel I, IIa und II werden zunächst teilweise oder vollständig im Reaktionsgemisch gehalten, beispielsweise *via* Rücklauf oder Rückfluss, und man beginnt, nachdem Verbindung der allgemeinen Formel III teilweise oder vollständig abdestilliert wurde, das Produkt der allgemeinen Formel I überzudestillieren und hält dabei Verbindung der allgemeinen Formel IIa und II teilweise oder vollständig im Reaktionsgemisch, beispielsweise *via* Rücklauf oder Rückfluss.

In einer zweiten bevorzugten Ausführungsform werden die Verbindungen der allgemeinen Formel I und III aus dem Gemisch herausdestilliert und die Verbindungen der allgemeinen Formel II und IIa werden teilweise oder vollständig im Gemisch gehalten, beispielsweise *via* Rücklauf oder Rückfluss.

In einer dritten bevorzugten Ausführungsform verfährt man wie in der zweiten bevorzugten Ausführungsform und unterwirft das Destillat enthaltend Verbindungen der allgemeinen Formeln I und III einer Redestillation.

Verbindungen der allgemeinen Formeln II und IIa werden während der Ausführung destillativer Verfahrensschritte vorzugsweise weiter zu Verbindung der allgemeinen Formel I umgesetzt, wobei beispielsweise Verbindung der allgemeinen Formel III als Nebenprodukt entstehen kann, welche vorzugsweise abgetrennt wird, beispielsweise im gleichen oder einem folgenden Destillationsschritt.

Die bei den bevorzugten Ausführungsformen anfallenden Destillate werden teilweise oder vollständig kondensiert. Vorzugsweise werden eingesetzte Katalysatoren hinsichtlich ihres Dampfdrucks so gewählt, dass sie und ihre Verbindungen, die beispielsweise im Katalysezyklus oder bei anderen Reaktionen entstehen, bei destillativen Verfahrensschritten vorzugsweise im Reaktionsgemisch verbleiben, was beispielsweise dadurch erzielt werden kann, dass salzartige Katalysatoren oder Katalysatoren, die in Ihrer Einsatzform oder in ihrer aktiven Form oder in ihrer Ruheform eine höhere Molmasse aufweisen als die Produkte der allgemeinen Formeln I und/oder gegebenenfalls III eingesetzt werden. Vorzugsweise katalysieren die Katalysatoren die Reaktion von Verbindung der allgemeinen Formel II zu Verbindungen der allgemeinen Formel I und gegebenenfalls IIa und/oder III beziehungsweise die Reaktion von Verbindungen der allgemeinen Formel IIa zu I und gegebenenfalls III während der Ausführung des destillativen Verfahrensschritts weiterhin. Die Reaktion von Verbindung der allgemeinen Formel II zu Verbindungen der allgemeinen Formel I und gegebenenfalls IIa und/oder III kann eine Gleichgewichtsreaktion sein. Vorzugsweise wird die erste, zweite oder dritte bevorzugte Ausführungsform des Verfahrens angewendet, so dass die Produkte der allgemeinen Formeln I oder III oder beide, vorzugsweise in Gegenwart von Katalysatoren, aus dem Gleichgewicht entfernt werden, und das eingesetzte Edukt der allgemeinen Formel II zu vorzugsweise mindestens 50 Mol-%, bevorzugt mindestens 70 Mol-%, besonders bevorzugt mindestens 90 Mol-%, bezogen auf die theoretisch mögliche Stoffmenge in Summe, zu Produkten der allgemeinen Formel I umgesetzt wird.

Vorzugsweise werden nicht umgesetzte Verbindung der allgemeinen Formel II sowie gegebenenfalls anfallende Verbindungen der allgemeinen Formel IIa in einen erneuten Ansatz, der bevorzugt nach dem erfindungsgemäßen Verfahren ausgeführt wird, eingesetzt. Ebenso kann Verbindung der allgemeinen Formel II oder IIa, die gegebenenfalls aus anderen Quellen stammen kann, im erfindungsgemäßen Verfahren eingesetzt werden.

Die Katalysatoren können vor, während oder nach der Ausführung des Verfahrens aktive oder inaktive, aktivierbare, reaktivierbare oder nicht reaktivierbare Spezies bilden. Solche Spezies können beispielsweise folgende Strukturelemente aufweisen, LₐM-O-[(L)_{b}M-O-]_{c}[Si(R²)₂-CH₂-O-]_{d}C(=O)R¹ LₐM-[O-M(L) _{b}-]ₑ[O-CH₂-Si(R²)₂-]_{f}(OR³) LₐM-O-[(L)_{b}M-O-]_{g}[Si(R²)₂-CH₂-O-ₕ[M(L) _{b}-O-]ᵢMLₐ cyclo-{[(L)_{b}M-O-]ⱼ(Si(R²)₂-CH₂-O-]ₖ} , wobei M ein Metallatom ist, L Liganden bedeuten, die beispielsweise mit der eingesetzten Form des Katalysators ins Reaktionsgemisch eingebracht werden können oder in *situ* an das Metall binden können, wie beispielsweise Gruppen OR³, Gruppen OC(O)R¹, Gruppen R², Carbonylgruppen, Gruppen R¹ oder Gruppen C(O)R¹,
**a, b, c, e, g, h, i** und **k** ganzzahlige Werte größer oder gleich 0 bedeuten,
d, f und j ganzzahlige Werte größer oder gleich 1 bedeuten, und wobei die Katalysatorspezies linear oder verzweigt oder cyclisch sein oder mehrere Cyclen aufweisen können,
und wobei die Symbole M im Falle von Spezies, die mehrere Metallatome M aufweisen, für gleiche oder verschiedene metallische Elemente stehen können.

Als Liganden L, die mit der eingesetzten Form des Katalysators ins Reaktionsgemisch eingebracht werden können, können beispielsweise die Gruppen auftreten, die weiter oben in den beispielhaft beschriebenen Katalysatoren als metallgebundene Gruppen benannt sind. Ferner können weitere Liganden L dem Reaktionsgemisch zugesetzt werden, beispielsweise mono-, bi-, tri-, tetra-, penta-, hexadentate und höherzähnige Verbindungen wie beispielsweise Schwefelverbindungen, Phosphorverbindungen, Kohlenstoffmonooxid, Cyanide, Ethylendiamin, Tetramethylethylendiamin, Ethylendiamintetraacetat und seine Salze, Citrate, Acetylaceton und seine Salze oder Glyoxime oder Ether, Oligoether oder Polyether wie beispielsweise Polyethylenglykol oder Polypropylenglykol.

Vorzugsweise werden eingesetzte Katalysatoren in ihrer eingesetzten, aktiven oder in einer reaktivierbaren Ruheform wiedergewonnen und bevorzugt in dem erfindungsgemäßen Verfahren wieder eingesetzt.

Bei dem Verfahren können Verbindungen zugesetzt werden, die in den Reaktionsverlauf eingreifen, wie beispielsweise Carbonsäuren und ihre Derivate oder Alkohole und ihre Derivate.

Bei dem Verfahren können optional Alkohole der Struktur R⁶OH zugesetzt werden, wobei **R⁶** dieselben Bedeutungen annehmen kann wie **R³** wie oben definiert. In diesem Fall können in den vorgenannten Formeln die Gruppen **OR³** und **OR⁴** teilweise oder vollständig durch Gruppen **OR⁶** substituiert werden, wobei Alkohole der Struktur **R³OH** beziehungsweise R⁴OH gebildet werden können, und die Gruppen R¹-C(=O)- können in den vorgenannten Formeln durch Wasserstoff substituiert werden. Weist R⁶ mehrere alkoholische OH-Funktionen auf, so können meherere derartige Austauschreaktionen stattfinden, so dass entsprechende *via* **R⁶** verbrückte Strukturen entstehen.

Bei dem Verfahren können optional Ester der Struktur R⁷-C(=O)-**OR⁶** zugesetzt werden, wobei **R⁶** dieselben Bedeutungen annehmen kann wie oben definiert und **R⁷** dieselben Bedeutungen annehmen kann wie oben für R¹ definiert. In diesem Fall können in den vorgenannten Formeln die Gruppen **OR³** und **OR⁴** teilweise oder vollständig durch Gruppen OR⁶ und die Gruppen **R¹**-C(=O)- teilweise oder vollständig durch Gruppen R⁷-C(=O)- substituiert werden. Weist **R⁷** weitere Carbonsäurefunktionen, die teilweise oder vollständig verestert sein können, oder weist R⁶ weitere alkoholische OH-Funktionen, die teilweise oder vollständig verestert sein können, auf, so können mehrere derartige Austauschreaktionen stattfinden, so dass entsprechende *via* **R⁷** beziehungsweise *via* R⁶ verbrückte Strukturen entstehen.

Bei dem Verfahren können optional Carbonsäuren der Struktur R⁷-C(=O)-OH zugesetzt werden, wobei R⁷ dieselben Bedeutungen annehmen kann wie oben definiert. In diesem Fall können in den vorgenannten Formeln die Gruppen R¹-C(=O)- teilweise oder vollständig durch Gruppen R⁷-C(=O)- und die Gruppen OR³ und OR⁴ teilweise oder vollständig durch Gruppen OH substituiert werden. Entstehende *Si*-gebundene OH-Gruppen können in Folge auch entsprechende Siloxane bilden. Weist **R⁷** mehrere C(=O)OH-Funktionen auf, so können meherere derartige Austauschreaktionen stattfinden, so dass entsprechende *via* **R⁷** verbrückte Strukturen entstehen.

Bei dem Verfahren können optional Lösungsmittel oder Gemische aus Lösungsmitteln eingesetzt oder zugefügt werden. Beispiele für einsetzbare Lösungsmittel sind gegebenenfalls halogenierte, beispielsweise chlorierte, oder halogenfreie Kohlenwasserstoffe, Ketone oder Ether. Werden Alkohole, Ester oder Carbonsäuren als Lösungsmittel eingesetzt, so können die oben zu diesen Stoffklassen beschriebenen Effekte auftreten, was, wenn diese Effekte unerwünscht sind, zu einer Einschränkung der Lösungsmittelauswahl aus diesen Stoffklassen führen kann. Die Lösungsmittel können gesättigt oder ungesättigt sein, ungesättigte Lösungsmittel weisen vorzugsweise aromatische Unsättigung auf. Beispiele für einsetzbare Lösungsmittel sind Isomere von C₅-C₄₀-Kohlenwasserstoffen wie beispielsweise Cyclohexan, Heptan, Octan, *iso*-Octan, Nonan, Decan, Dodecan, Benzol, Toluol, *ortho-, meta-* oder *para*-Xylol oder -Cymol, Cumol, Ethylbenzol, Diethylbenzol oder Kohlenwasserstoffgemische wie beispielsweise solche aus der Shellsol-Serie der Fa. Shell oder aus der Hydroseal-Serie der Fa. Total, C₃-C₄₀-Ketone wie Aceton, Butanon, 2-Pentanon, 3-Pentanon, 3-Methylbutanon, 4-Methylpentan-2-on, Cyclohexanon, Ether wie Tetrahydrofuran, Diethylether, *tert*-Butylmethylether, *tert*-Amylmethylether, Diisopropylether, halogenierte Kohlenwasserstoffe wie Chlorbenzol, *ortho-,* meta- oder *para*-Dichlorbenzol oder die Isomere des Trichlorbenzols. Vorzugsweise wird bei dem Verfahren möglichst wenig Lösungsmittel eingesetzt, vorzugsweise beträgt die Masse an Lösungsmittel, in Summe aller Lösungsmittel, weniger als das Fünffache der Masse an in Summe eingesetzten Verbindungen der allgemeinen Formel II, bevorzugt weniger als das Doppelte, besonders bevorzugt weniger als die Hälfte. In einer besonders bevorzugten Ausführungsform wird das Verfahren ohne zugesetzte Lösungsmittel ausgeführt.

Die Anwesenheit von Wasser im Reaktionsgemisch kann beispielsweise zur Hydrolyse Si-gebundender Gruppen OR³ und OR⁴ und zur Hydrolyse von Struktureinheiten Si-OCH₂ führen, wobei Silanole und Siloxane als Intermediate oder Endprodukte entstehen können. Ferner kann Wasser zur Hydrolyse von Gruppen C(=O)-OC zu den entsprechenden Carbonsäuren und Alkoholen bewirken. Je nach eingesetztem Katalysator kann Wasser auch mit dem Katalysator reagieren, beispielsweise unter Bildung von Hydraten, Hydroxo-oder Oxoverbindungen oder Oxiden. Insgesamt kann Wasser beispielsweise den Reaktionsverlauf, die Reaktionsgeschwindigkeit, die Produktreinheit und die Ausbeute beeinflussen. Fachleute können durch geeignete Vorversuche leicht feststellen, welche Wassermenge welche Effekte bewirkt.

Das Verfahren wird vorzugsweise unter inerten Bedingungen, bevorzugt unter einer Stickstoff- oder Argonatmosphäre, ausgeführt. Eingesetzte Edukte und Lösungsmittel enthalten vorzugsweise weniger als 10000 ppm Wasser, bevorzugt weniger als 1000 ppm, besonders bevorzugt weniger als 200 ppm. Eingesetzte Gase, beispielsweise Schutzgas, enthalten vorzugsweise weniger als 10000 ppm Wasser, bevorzugt weniger als 1000 ppm, besonders bevorzugt weniger als 200 ppm und vorzugsweise weniger als 10000 ppm Sauerstoff, bevorzugt weniger als 1000 ppm, besonders bevorzugt weniger als 200 ppm. Eingesetzte Katalysatoren enthalten vorzugsweise weniger als 10% Wasser, bevorzugt weniger als 2%, besonders bevorzugt weniger als 0,5%.

Nach dem erfindungsgemäßen Verfahren hergestellte Verbindungen der allgemeinen Formel I können beispielsweise direkt wie angefallen, das bedeutet gegebenenfalls im Gemisch mit Verbindungen der allgemeinen Formeln II, IIa, III oder mit Katalysatoren, Promotoren, Kontaktgiften Co-Reagenzien oder Lösungsmitteln für nachfolgende chemische Reaktionen oder sonstige Anwendungen eingesetzt werden. Die hergestellten Reakionsprodukte können aber auch wahlweise gereinigt werden. Vorzugsweise werden die Verbindungen der allgemeinen Formel I direkt aus dem Reaktionsgemisch, das gegebenenfalls noch Katalysator enthält, destilliert. Die Destillation von Verbindungen der allgemeinen Formel I kann gegebenenfalls vor, während (d.h. zusammen mit) oder nach der Destillation anderer Verbindungen, wie beispielsweise Verbindungen der allgemeinen Formeln II, IIa oder III, erfolgen. Optional kann Redestillation erfolgen. Hergestellte Verbindung der allgemeinen Formel I kann beispielsweise flüssig anfallen oder erstarren oder kristallisieren. Vorzugsweise werden eingesetzte Katalysatoren, Promotoren oder Kontaktgifte und Aufarbeitungsschritte so gewählt, dass eingesetzte Katalysatoren, Promotoren, Kontaktgifte, Co-Reagenzien oder Lösungsmittel im isolierten Produkt der allgemeinen Formel I zu weniger als 10%, bevorzugt weniger als 1%, besonders bevorzugt weniger als 0,1% vorhanden sind. Fachleute können durch Vorversuche leicht die möglichen Kombinationen aus Katalysatoren, Promotoren oder Kontaktgiften und Aufarbeitungs- bzw. Reinigungsschritten finden; Anleitungen zu Katalysatoren, Promotoren, Kontaktgiften, Aufarbeitungs- und Reinigungsschritten sind oben erwähnt und finden sich in den Beispielen.

Alle vorstehenden Symbole der vorstehenden Formeln weisen ihre Bedeutungen jeweils unabhängig voneinander auf und können in allen Formeln gleich oder verschieden sein. Soweit nicht anders angegeben, bedeuten die vorstehenden %-Angaben Gewichts-Prozente. Soweit nicht anders angegeben, beziehen sich Ausbeuteangaben in % des Theoretischen (% d.Th.) auf die eingesetzte Stoffmenge an Silan und wurden unter Berücksichtigung der angegebenen Reinheiten der jeweiligen Produkte berechnet. In allen Formeln ist das Siliciumatom vierwertig. Soweit nicht anders angegeben, stellen alle Druckangaben absolute Druckangaben dar. Soweit nicht anders angegeben, umfasst die Definition "Hetero-atom" alle Elemente außer Kohlenstoff und Wasserstoff. Bei sogenannten Dialkylzinnoxiden, die in der Regel in Form von Poly-(dialkylstannoxanen) eingesetzt werden, wurden die angegebenen Stoffmengen auf die angegebene Formeleinheit des Dialkylzinnoxids berechnet.

### Beispiele

### Beispiel 1. 2,2,5,5-Tetramethyl-2,5-disila-1,4-dioxacyclohexan (Katalysator: Dioctylzinnoxid; Wiedereinsatz des Katalysators)

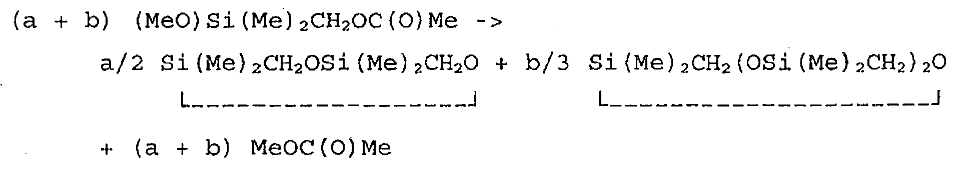

### Reaktion

Ein Gemisch aus 70,0 kg (Acetoxymethyl)dimethylmethoxysilan (431,4 mol) und 0,78 kg Dioctylzinnoxid (2,2 mol) wurde unter Stickstoff-Atmosphäre auf 120°C aufgeheizt. Innerhalb von 3 Stunden wurden davon bei 1 bar und 118-122°C Sumpftemperatur 17,4 kg Methylacetat (234,9 mol) über eine Kolonne abdestilliert. Danach wurde unter Rückflusskühlung ein dynamisches Vakuum angelegt, das bei 120 °C Sumpftemperatur innerhalb von 7 Stunden auf 60 mbar verschärft und anschließend weitere 7 Stunden bei 60 mbar und 117 °C Sumpftemperatur gehalten wurde. Das entstandene abgedampfte Methylacetat wurde auf der Druckseite der Vakuumpumpe kondensiert. Danach wurde die Rückflusskühlung ausgeschaltet und bei 55-75 mbar, 121 °C Sumpftemperatur und 40-68°C Kopftemperatur 29,2 kg Destillat über eine Kolonne abgenommen (Produktfraktion), Das Produkt wurde als farblose Flüssigkeit in hoher Reinheit erhalten (2,2,5,5-Tetramethyl-2,5-disila-1,4-dioxan, Anteil am Produkt 97,1% (GC-Flächen-%), entsprechend 160,8 mol, und (2,2,5,5,8,8-Hexamethyl-2,5,8-trisila-1,4,7-trioxan, Anteil am Produkt 2,1% (GC-Flächen-%), entsprechend 2,3 mol; Ausbeute (Summe) 76% d.Th.). Das isolierte Produkt enthielt nur 0,3% (GC-Flächen-%) (Acetoxymethyl)dimethylmethoxysilan, 0,1% (GC-Flächen-%) Methylacetat und 0,2 ppm Zinn (berechnet als Metall). Der Sumpf enthielt Katalysator.

### Wiedereinsatz des Katalysators

Zu dem Destillationssumpf wurden unter Stickstoff-Atmosphäre erneut 70,0 kg (Acetoxymethyl)dimethylmethoxysilan (431,4 mol) gegeben und auf 120 °C aufgeheizt. Innerhalb von 2 Stunden wurden davon bei 1 bar und 117-122 °C Sumpftemperatur 14,8 kg Methylacetat (199,8 mol) über eine Kolonne abdestilliert. Danach wurde unter Rückflusskühlung ein dynamisches Vakuum ange-legt, das bei 120 °C Sumpftemperatur innerhalb von 4 Stunden auf 120 mbar verschärft und anschließend weitere 9 Stunden bei 120 mbar und 119-120 °C Sumpftemperatur gehalten wurde. Das entstandene abgedampfte Methylacetat wurde auf der Druckseite der Vakuumpumpe kondensiert (6,7 kg, 89,9 mol). Danach wurde die Rückflusskühlung ausgeschaltet und bei 54-77 mbar, 119-122 °C Sumpftemperatur und 46-60 °C Kopftemperatur 29,8 kg Destillat über eine Kolonne abgenommen (Produktfraktion). Das Produkt wurde als farblose Flüssigkeit in hoher Reinheit erhalten (2,2,5,5-Tetramethyl-2,5-disila-1,4-dioxan, Anteil am Produkt 97,4% (GC-Flächen-%), entsprechend 164,6 mol, und (2,2,5,5,8,8-Hexamethyl-2,5,8-trisila-1,4,7-trioxan, Anteil am Produkt 1,8% (GC-Flächen-%), entsprechend 2,0 mol; Ausbeute (Summe) 78% d.Th.). Das isolierte Produkt enthielt nur 0,4% (GC-Flächen-%) (Acetoxymethyl)dimethylmethoxysilan, 0,1% (GC-Flächen-%) Methylacetat und 0,1 ppm Zinn (berechnet als Metall). Der Sumpf enthielt Katalysator.

### Beispiel 1 zeigt, dass der Katalysator bei gleichbleibender Ausbeute an Produkt wiederverwendet werden kann.

### Beispiel 2. 2,2,5,5-Tetramethyl-2,5-disila-1,4-dioxacyclohexan (Katalysator: Dioctylzinnoxid)

2 (MeO)Si(Me)₂CH₂OC(O)Me -> [(Me)₂SiCH₂O]₂ + 2 MeOC(O)Me

Ein Gemisch aus 71,7 kg (Acetoxymethyl)dimethylmethoxysilan (441,9 mol) und 0,76 kg Dioctylzinnoxid (2,1 mol) wurde unter Stickstoff-Atmosphäre auf 120 °C aufgeheizt. Innerhalb von 3,5 Stunden wurden davon bei 1 bar 22,5 kg Methylacetat (303,7 mol) über eine Kolonne abdestilliert, wobei die Sumpftemperatur zunächst 1,5 Stunden lang 115-124 °C betrug und dann in den folgenden 2 Stunden auf 150 °C gesteigert wurde. Danach wurde unter Rückflusskühlung ein dynamisches Vakuum angelegt, das bei 145-150 °C Sumpftemperatur innerhalb von 6 Stunden auf 210 mbar verschärft wurde. Das entstandene abgedampfte Methylacetat wurde auf der Druckseite der Vakuumpumpe kondensiert (3,0 kg, 40,5 mol). Danach wurde die Rückflusskühlung ausgeschaltet und bei 20-60 mbar, 118-123 °C Sumpftemperatur und 58-75 °C Kopftemperatur 26,8 kg Destillat über eine Kolonne abgenommen (Produktfraktion). Das Produkt (2,2,5,5-Tetramethyl-2,5-disila-1,4-dioxan, 152,0 mol, 72% d.Th., Reinheit 99,2% (GC-Flächen-%)) wurde als farblose Flüssigkeit erhalten. Es enthielt nur 0,3% (GC-Flächen-%) (Acetoxymethyl)dimethylmethoxysilan und 0,1% (GC-Flächen-%) Methylacetat. Der Katalysator verblieb im Sumpf.

### Beispiel 3. 2,2,5,5-Tetramethyl-2,5-disila-1,4-dioxacyclohexan (Katalysator: Dibutylzinndilaurat)

2 (MeO)Si(Me)₂CH₂OC(O)Me -> [(Me)₂SiCH₂O]₂ + 2 MeOC(O)Me

Ein Gemisch aus 36,5 g (Acetoxymethyl)dimethylmethoxysilan (225 mmol) und 1,6 g Dibutylzinndilaurat (2,5 mmol) wurde unter Stickstoff-Atmosphäre auf 120°C aufgeheizt. Innerhalb von 5 Stunden wurden davon bei 1 bar und 116-121°C Sumpftemperatur 10,9 g Methylacetat (147 mmol) über eine Widmer-Kolonne abdestilliert. Danach wurde unter Rückflusskühlung ein dynamisches Vakuum angelegt, das bei 120 °C Sumpftemperatur innerhalb von Stunde auf 72 mbar verschärft und anschließend weitere 4 Stunden bei 72 mbar und 120-125 °C Sumpftemperatur gehalten wurde. Das entstandene abgedampfte Methylacetat wurde in einer Kühlfalle bei -78°C kondensiert (3,5 g, 47 mmol). Danach wurde die Rückflusskühlung ausgeschaltet und bei 10 mbar, 122-124 °C Sumpftemperatur und 39-40 °C Kopftemperatur 16,9 g Destillat abgenommen (Produktfraktion). Das Produkt (2,2,5,5-Tetramethyl-2,5-disila-1,4-dioxan, 95,8 mmol, 85% d.Th., Reinheit 98,9% (GC-Flächen-%) wurde als farblose Flüssigkeit erhalten. Es enthielt kein (Acetoxymethyl)dimethylmethoxysilan, 0,2% (GC-Flächen-%) Methylacetat und < 0,1 ppm Zinn (berechnet als Metall). Der Sumpf enthielt Katalysator.

### Beispiel 4. 2,2,5,5-Tetramethyl-2,5-disila-1,4-dioxacyclohexan (Katalysator: Dibutylzinnoxid)

2 (MeO)Si(Me)₂CH₂OC(O)Me -> [(Me)₂SiCH₂O]₂ + 2 MeOC(O)Me

Ein Gemisch aus 100 g (Acetoxymethyl)dimethylmethoxysilan (616 mmol) und 750 mg Dibutylzinnoxid (3,1 mmol) wurde unter Stickstoff-Atmosphäre auf 120°C aufgeheizt. Innerhalb von 100 Minuten wurden davon bei 1 bar und 120 °C Sumpftemperatur 24,2 g Methylacetat (327 mmol) über eine Vigreux-Kolonne abdestilliert. Danach wurde ohne Rückflusskühlung ein dynamisches Vakuum angelegt, das bei 120 °C Sumpftemperatur innerhalb von 3 Stunden auf 70 mbar verschärft wurde. Das entstandene abgedampfte Methylacetat wurde in einer Kühlfalle bei -78°C, kondensiert (17,9 g, 242 mmol). Danach wurde bei 15 mbar, 87-125 °C Sumpftemperatur und 38-48 °C Kopftemperatur 50,3 g Destillat abgenommen (Produktfraktion), der Hauptlauf fiel bei stabil 48 °C Kopftemperatur / 15 mbar an. Das Produkt wurde als farblose Flüssigkeit erhalten, es enthielt 98,8% (GC-Flächen-%) an 2,2,5,5-Tetramethyl-2,5-disila-1,4-dioxan, entsprechend 282 mmol (91% d.Th.). Das Produkt enthielt kein (Acetoxymethyl)dimethyl-methoxysilan, 0,2% (GC-Flächen-%) Methylacetat und 0,5 ppm Zinn (berechnet als Metall). Der Sumpf enthielt Katalysator.

### Beispiel 5. 2,5-Dimethoxy-2,5-dimethyl-2,5-disila-1,4-dioxacyclohexan (cis-/trans-Gemisch) (Katalysator: Dioctylzinnoxid)

2 (MeO)₂Si(Me)CH₂OC(O)Me -> [(MeO) (Me)SiCH₂O]₂ + 2 MeOC(O)Me

Ein Gemisch aus 44,6 g (Acetoxymethyl)methyldimethoxysilan (250 mmol) und 0,45 g Dioctylzinnoxid (1,25 mmol) wurde unter Stickstoff-Atmosphäre auf 120 °C aufgeheizt. Innerhalb von 3 Stunden wurden davon bei 1 bar und 86-117 °C Sumpftemperatur 10,7 g Methylacetat (144 mmol) über eine Widmer-Kolonne abdestilliert. Danach wurde unter Rückflusskühlung ein dynamisches Vakuum angelegt, das bei 120-135°C Sumpftemperatur innerhalb von 5 Stunden auf 28 mbar verschärft wurde. Das entstandene abgedampfte Methylacetat wurde in einer Kühlfalle bei -78°C kondensiert (5,6 g, 76 mmol). Danach wurde die Rückflusskühlung ausgeschaltet und bei 0,4 mbar, 108-114 °C Sumpftemperatur und 27 °C Kopftemperatur 16,6 g Destillat über eine Widmer-Kolonne abgenommen (Produktfraktion). Das Produkt (2,5-Dimethoxy-2,5-dimethyl-2,5-disila-1,4-dioxan, 79,7 mmol, 64% d.Th., Reinheit 97,1% (GC-Flächen-%)) wurde als farblose Flüssigkeit erhalten. Es besteht laut NMR und GC aus zwei *ax*/*eq*-Isomeren im Verhältnis 1,1 : 1 (dies sind die *cis-*/*trans*-Isomere des 2,5-Dimethoxy-2,5-dimethyl-2,5-disila-1,4-dioxans) und enthielt nur 0,6% (GC-Flächen-%) (Acetoxymethyl)methyldimethoxysilan und 0,2% (GC-Flächen-%) Methylacetat. Der Sumpf enthielt Katalysator.

### Beispiel 6. 2,2,5,5-Tetramethoxy-2,5-disila-1,4-dioxacyclohexan und 2,2,5-Trimethoxy-5-methyl-2,5-disila-1,4-dioxacyclohexan (Katalysator: Dioctylzinnoxid)

2 (MeO)₃SiCH₂OC(O)Me -> [(MeO)₂SiCH₂O]₂ + 2 MeOC(O)Me

Ein Gemisch aus 97,1 g Silan (enthaltend 97,4% (GC-Flächen-%) (Acetoxymethyl)trimethoxysilan, entsprechend 487 mmol, und 2,6% (GC-Flächen-%) (Acetoxymethyl)dimethoxymethylsilan, entsprechend 14,2 mmol)) und 0,9 g Dioctylzinnoxid (2,5 mmol) wurde unter Stickstoff-Atmosphäre auf 120 °C aufgeheizt. Innerhalb von 2 Stunden wurden davon 26,7 g Methylacetat (360 mmol) bei 1 bar und 80-120 °C Sumpftemperatur über eine Widmer-Kolonne abdestilliert. Danach wurde unter Rückflusskühlung ein dynamisches Vakuum angelegt, das bei 1.13-124 °C Sumpftemperatur innerhalb von 3 Stunden auf 95 mbar verschärft wurde. Das entstandene Methylacetat wurde in einer Kühlfalle bei -78 °C kondensiert (7,9 g, 107 mmol). Danach wurde die Rückflusskühlung ausgeschaltet und bei 0,33 mbar, 113-124 °C Sumpftemperatur und 33-35 °C Kopftemperatur 10,5 g Destillat abgenommen. Die farblose Flüssigkeit bestand laut GC und GC-MS aus 75,0% (GC-Flächen-%) 2,2,5,5-Tetramethoxy-2,5-disila-1,4-dioxacyclohexan (32,8 mmol, 13% d.Th. relativ zur eingesetzten Stoffmenge an (Acetoxymethyl)trimethoxysilan) und 22,1% (GC-Flächen-%) 2,2,5-Trimethoxy-5-methyl-2,5-disila-1,4-dioxacyclohexan (10,3 mmol, 73% d.Th. bezogen auf die eingesetzte Stoffmenge an (Acetoxymethyl)dimethoxymethylsilan, bzw. 2% d.Th. bezogen auf die eingesetzte Stoffmenge an (Acetoxymethyl)trimethoxysilan). Es enthielt nur 0,35% (GC-Flächen-%) (Acetoxymethyl)trimethoxysilan und 0,1% (GC-Flächen-%) Methylacetat. Danach wurden bei 0,11-0,16 mbar, 105-120°C Sumpftemperatur und 46-84 °C Kopftemperatur 38,8 g weiteres farbloses Destillat abgenommen. Es bestand laut GC und GC-MS überwiegend aus Oligomeren und enthielt noch 35,3% (GC-Flächen-%) 2,2,5,5-Tetramethoxy-2,5-disila-1,4-dioxacyclohexan (57,0 mmol, 23% d.Th. bezogen auf die eingesetzte Stoffmenge an (Acetoxymethyl)trimethoxysilan) und 0,2% (GC-Flächen-%) 2,2,5-Trimethoxy-5-methyl-1,4-dioxa-2,5-disila-cyclohexan (0,3 mmol, 2% d.Th. bezogen auf die eingesetzte Stoffmenge an (Acetoxymethyl)dimethoxymethylsilan, 0,06% d.Th. bezogen auf die eingesetzte Stoffmenge an (Acetoxymethyl)trimethoxysilan). Der Sumpf enthielt Katalysator.

### Beispiel 7. 2,2,5,5-Tetramethyl-2,5-disila-1,4-dioxacyclohexan (Katalysator: Titan (IV) -n-butoxid)

2 (MeO)Si(Me)₂CH₂OC(O)H -> [Me₂SiCH₂O]₂ + 2 MeOC(O)H

Ein Gemisch aus 74,1 g (Formoxymethyl)dimethylmethoxysilan (500 mmol) und 1,7 g Titan(IV)-*n*-butoxid (5 mmol) wurde unter Stickstoff-Atmosphäre auf 120 °C aufgeheizt. Innerhalb von 2 Stunden wurden davon bei 1 bar und 80-128 °C Sumpftemperatur 19,3 g Methylformiat (321 mmol) abdestilliert. Danach wurde unter Rückflusskühlung ein dynamisches Vakuum von 360 mbar angelegt, das bei 120 °C Sumpftemperatur innerhalb von 5 Stunden auf 70 mbar verschärft wurde. Das entstandene Methylformiat wurde in einer Kühlfalle bei -78 °C kondensiert (3,3 g, 55 mmol). Danach wurde die Rückflusskühlung ausgeschaltet und bei 11 mbar, 113-126 °C Sumpftemperatur und 42 °C Kopftemperatur 18,9 g Destillat abgenommen. Das Produkt (2,2,5,5-Tetramethyl-2,5-disila-1,4-dioxacyclohexan, 104 mmol, 42% d.Th., Reinheit 97,4% (GC-Flächen-%)) wurde als farblose Flüssigkeit erhalten. Es enthielt 1,4% (GC-Flächen-%) (Formoxymethyl)dimethylmethoxysilan und 0,1% (GC-Flächen-%) Methylformiat. Der Sumpf enthielt Katalysator.

### Beispiel 8. 2,2,5,5-Tetramethyl-2,5-disila-1,4-dioxacyclohexan (Katalysator: Dioctylzinnoxid; [2-(2-Ethoxy-ethoxy)ethyl]-acetat)

2 (MeO)Si(Me)₂CH₂OC(O)Me -> [Me₂SiCH₂O]₂ + 2 MeOC(O)Me

Ein Gemisch aus 81,1 g (Acetoxymethyl)dimethylmethoxysilan (500 mmol), 1,8 g Dioctylzinnoxid (5 mmol) und 0,44 g [2-(2-Ethoxy-ethoxy)ethyl]acetat (2,5 mmol) wurde unter Stickstoff-Atmosphäre auf 120 °C aufgeheizt. Innerhalb von 2,5 Stunden wurden davon bei 1 bar und 112-120°C Sumpftemperatur 17,0 g Methylacetat (229,5 mmol) abdestilliert. Danach wurde unter Rückflusskühlung ein dynamisches Vakuum von 450 mbar angelegt, das bei 109-129 °C Sumpftemperatur innerhalb von 8 Stunden auf 50 mbar verschärft wurde. Das entstandene Methylacetat wurde in einer Kühlfalle bei -78 °C kondensiert (6,9 g, 93 mmol). Danach wurde die Rückflusskühlung ausgeschaltet und bei 12-15 mbar, 103-120 °C Sumpftemperatur und 46 °C Kopftemperatur 38,1 g Destillat abgenommen. Das Produkt (2,2,5,5-Tetramethyl-2,5-disila-1,4-dioxacyclohexan, 213 mmol, 85% d.Th., Reinheit 99,4% (GC-Flächen-%)) wurde als farblose Flüssigkeit erhalten. Es enthielt 0,4% (GC-Flächen-%) (Acetoxymethyl)dimethylmethoxysilan und 0,2% (GC-Flächen-%) Methylacetat. Der Sumpf enthielt Katalysator.

Beispiel 8 zeigt im Vergleich mit Beispiel 1, dass durch den Zusatz eines Esters bei gleicher Produktqualität die Reaktionszeit verkürzt wird. Weitere Vergleichsversuche, die analog zu Beispiel 1 durchgeführt wurden, und bei denen kein Esterzusatz, aber Stoffmengenverhältnisse von Silan zu Dioctylzinnoxid von 200 : 1 (0,5 Mol-% Katalysator) bis 20 : 1 (5 Mol-% Katalysator) eingesetzt wurden, zeigten keine Verkürzung der Reaktionszeit mit zunehmender relativer Katalysatormenge.

### Beispiel 9. 2,2,5,5-Tetramethyl-2,5-disila-1,4-dioxacyclohexan (Katalysator: Dioctylzinnoxid; Methanol)

2 MeOMe₂SiCH₂OC(O)Me -> [Me₂SiCH₂O]₂ + 2 MeOC(O)Me

Ein Gemisch aus 81,1 g (Acetoxymethyl)dimethylmethoxysilan (500 mmol) und 0,9 g Dioctylzinnoxid (2,5 mmol) wurde unter Stickstoff-Atmosphäre auf 120 °C aufgeheizt. Innerhalb von 2,5 Stunden wurden davon bei 1 bar und 108-122 °C Sumpftemperatur 14,1 g Methylacetat (190,3 mmol) abdestilliert. Danach wurden 16 g Methanol (500 mmol) zugegeben und das Gemisch wurde 2 Stunden unter Rückflusskühlung erhitzt (70-74°C Sumpftemperatur). Anschließend wurde die Rückflusskühlung ausgeschaltet und bei bar, 74-160 °C Sumpftemperatur und 50-57 °C Kopftemperatur 32,1 g farbloses Destillat abgenommen, das aus 61% (GC-Flächen-%) Methylacetat (∼263 mmol) und 39% (GC-Flächen-% Methanol) (∼388 mmol) bestand. Danach wurden bei 10-11 mbar, 105-130 °C Sumpftemperatur und 41-42 °C Kopftemperatur 38,2 g Destillat abgenommen. Das Produkt (2,2,5,5-Tetramethyl-2,5-disila-1,4-dioxa-cyclohexan, 213 mmol, 85% d.Th., Reinheit 98,2% (GC-Flächen-%)) wurde als farblose Flüssigkeit erhalten. Es enthielt 0,8% (GC-Flächen-%) (Hydroxymethyl)dimethylmethoxysilan, 0,1% (GC-Flächen-%) (Acetoxymethyl)dimethylmethoxysilan, 0,1% (GC-Flächen-%) Methanol und weniger als 0,1% (GC-Flächen-%) Methylacetat. Der Sumpf enthielt Katalysator.

Beispiel 9 zeigt im Vergleich mit Beispiel 1, dass durch den Zusatz eines Alkohols bei gleicher Produktqualität die Reaktionszeit verkürzt wird.

## Patentansprüche

1. Verfahren zur Herstellung von Silaoxacyclen der allgemeinen Formel I, 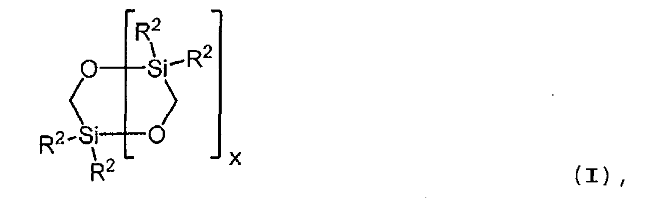 bei dem Verbindungen der allgemeinen Formel II
R¹-C(=O)-[O-CH₂-Si(R²)₂]ₙ-OR³ (II),
in Gegenwart von Katalysator, der ausgewählt wird aus einem Metall oder einer Verbindung eines Metalls der Gruppen 3 bis 15 und den Lanthanoiden des Periodensystems der Elemente nach IUPAC-Notation, umgesetzt werden, wobei
x ganzzahlige Werte größer oder gleich 0,
n ganzzahlige Werte größer oder gleich 1,
**R¹** Wasserstoff oder einen unsubstituierten oder mit einer oder mehreren Gruppen Q¹ substituierten Kohlenwasserstoffrest, der durch ein oder mehrere Heteroatome unterbrochen sein kann, oder eine Gruppe **OR³,**
**R²** Wasserstoff oder einen unsubstituierten oder mit einer oder mehreren Gruppen Q¹ substituierten Kohlenwasserstoffrest, der durch ein oder mehrere Heteroatome unterbrochen sein kann, oder eine Gruppe **OR⁴,**
**R³** einen unsubstituierten oder mit einer oder mehreren Gruppen Q¹ substituierten Kohlenwasserstoffrest, der durch ein oder mehrere Heteroatome unterbrochen sein kann,
**R**⁴ einen unsubstituierten oder mit einer oder mehreren Gruppen **Q¹** substituierten Kohlenwasserstoffrest, der durch ein oder mehrere Heteroatome unterbrochen sein kann, oder eine Gruppe **CH₂Si (R⁵)_{3-q}{OCH₂Si (R⁵)₃₋ᵣ[OCH₂Si(R⁵)₂(OR³)]ᵣ}_{q}** bedeuten,
**q** ganzzahlige Werte ausgewählt aus 0, 1, 2 oder 3,
**r** ganzzahlige Werte ausgewählt aus 0, 1, 2 oder 3,
**R⁵** Wasserstoff oder einen unsubstituierten oder mit einer oder mehreren Gruppen **Q¹** substituierten Kohlenwasserstoffrest, der durch ein oder mehrere Heteroatome unterbrochen sein kann, oder eine Gruppe **OR³,** und
**Q¹** einen einbindigen, zweibindigen oder dreibindigen heteroatomhaltigen Rest bedeuten,
wobei R¹, R², R³, R⁴, R⁵ und Q¹ miteinander verbunden sein können, so dass sich ein oder mehrere Ringe bilden.

2. Verfahren nach Anspruch 1, bei dem mindestens eine Verbindung der allgemeinen Formel I aus dem Reaktionsgemisch isoliert wird.

3. Verfahren nach Anspruch 2, bei dem das Isolieren der Verbindung der allgemeinen Formel I aus dem Reaktionsgemisch durch Destillation geschieht, wobei die Verbindung der allgemeinen Formel I als Destillat übergeht.

4. Verfahren nach Anspruch 1 bis 3, bei dem x Werte von 1 bis 3 annimmt.

5. Verfahren nach Anspruch 1 bis 4, bei dem R¹ ein Wasserstoffatom, ein C₁-C₁₂ Alkylrest, ein C₆-C₁₂ Arylrest, ein C₇-C₁₂ Alkylarylrest oder ein C₇-C₁₂ Arylalkylrest ist.

6. Verfahren nach Anspruch 1 bis 5, bei dem R² ein C₁-C₁₂ Alkylrest, ein C₆-C₁₂ Arylrest, ein C₇-C₁₂ Alkylarylrest oder ein C₇-C₁₂ Arylalkylrest, ein C₁-C₁₂ Alkoxyrest, ein C₂-C₁₂ (Alkoxy)alkoxyrest, ein C₆-C₁₂ Aryloxyrest, ein C₇-C₁₂ Arylalkoxyrest oder ein C₇-C₁₂ Alkylaryloxyrest ist.

7. Verfahren nach Anspruch 1 bis 6, bei dem R³ ein C₁-C₁₂ Alkylrest, ein C₆-C₁₂ Arylrest, ein C₇-C₁₂ Alkylarylrest, ein C₇-C₁₂ Arylalkylrest oder ein C₂-C₁₂ (Alkoxy)alkylrest ist.

8. Verfahren nach Anspruch 1 bis 7, bei dem der Rest R¹ ein Wasserstoffatom, eine Methyl- oder eine Ethylgruppe ist, die Reste R² unabhängig voneinander Methyl-, Methoxy- oder Ethoxygruppen sind, der Rest R³ eine Methyl- oder Ethylgruppe ist, n ganzzahlige Werte von 1 bis 3 annimmt und x ganzzahlige Werte von 1 bis 3 annimmt.

9. Verfahren nach Anspruch 1 bis 8, bei dem der Katalysator ausgewählt wird aus einem Metall oder einer Verbindung von Titan, Eisen, Cobalt, Nickel, Zink, Aluminium, Zinn, Blei oder Bismut.

10. Verbindungen der allgemeinen Formel IV 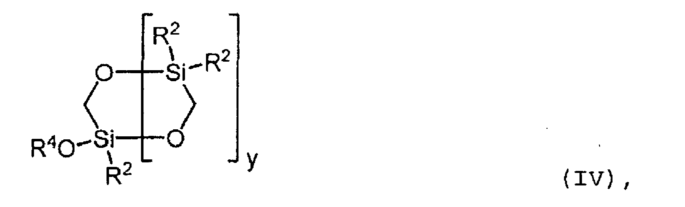 wobei
y ganzzahlige Werte größer oder gleich 1,
R² Wasserstoff oder einen unsubstituierten oder mit einer oder mehreren Gruppen Q¹ substituierten Kohlenwasserstoffrest, der durch ein oder mehrere Heteroatome unterbrochen sein kann, oder eine Gruppe **OR⁴,** und
**R**⁴ einen unsubstituierten oder mit einer oder mehreren Gruppen **Q¹** substituierten Kohlenwasserstoffrest, der durch ein oder mehrere Heteroatome unterbrochen sein kann, oder eine Gruppe **CH₂Si (R⁵)_{3-q}{OCH₂Si(R⁵)₃₋ᵣ [OCH₂Si(R⁵)₂ (OR³)]ᵣ}_{q},**
**q** ganzzahlige Werte ausgewählt aus 0, 1, 2 oder 3,
**r** ganzzahlige Werte ausgewählt aus 0, 1, 2 oder 3,
**R⁵** Wasserstoff oder einen unsubstituierten oder mit einer oder mehreren Gruppen **Q¹** substituierten Kohlenwasserstoffrest, der durch ein oder mehrere Heteroatome unterbrochen sein kann, oder eine Gruppe **OR³,**
**R**³ einen unsubstituierten oder mit einer oder mehreren Gruppen **Q¹** substituierten Kohlenwasserstoffrest, der durch ein oder mehrere Heteroatome unterbrochen sein kann, und
**Q**¹ einen einbindigen, zweibindigen oder dreibindigen heteroatomhaltigen Rest bedeuten,
wobei **R², R³, R⁴, R** und **Q¹** miteinander verbunden sein können, so dass sich ein oder mehrere Ringe bilden.

## Claims

1. Process for preparing silaoxacycles of the general formula I 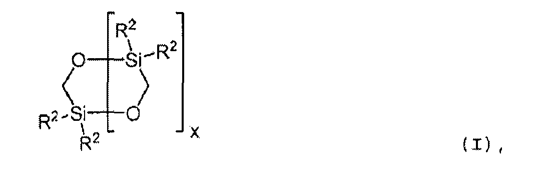 in which compounds of the general formula II
R¹-C(=O)-[O-CH₂-Si(R²)₂]ₙ-OR³ (II)
are converted in the presence of catalyst which is selected from a metal or a compound of a metal of groups 3 to 15 and the lanthanoids of the Periodic Table of the Elements according to IUPAC notation, where
x represents integers greater than or equal to 0,
**n** represents integers greater than or equal to 1,
**R¹** is hydrogen or a hydrocarbyl radical which is unsubstituted or substituted by one or more **Q¹** groups and may be interrupted by one or more heteroatoms, or an **OR³** group,
**R²** is hydrogen or a hydrocarbyl radical which is unsubstituted or substituted by one or more **Q¹** groups and may be interrupted by one or more heteroatoms, or an **OR⁴** group,
**R**³ is a hydrocarbyl radical which is unsubstituted or substituted by one or more Q¹ groups and may be interrupted by one or more heteroatoms,
**R**⁴ is a hydrocarbyl radical which is unsubstituted or substituted by one or more Q¹ groups and may be interrupted by one or more heteroatoms, or a **CH₂Si(R⁵)_{3-q}(OCH₂Si(R⁵)₃₋ᵣ[OCH₂Si(R⁵)₂(OR³)]ᵣ}_{q}** group,
**q** represents integers selected from 0, 1, 2 and 3,
**r** represents integers selected from 0, 1, 2 and 3,
**R**⁵ is hydrogen or a hydrocarbyl radical which is unsubstituted or substituted by one or more **Q¹** groups and may be interrupted by one or more heteroatoms, or an **OR³** group, and
Q¹ is a monovalent, divalent or trivalent heteroatom-containing radical,
where **R¹, R², R³, R⁴, R⁵** and **Q¹** may be joined to one another so as to form one or more rings.

2. Process according to Claim 1, in which at least one compound of the general formula I is isolated from the reaction mixture.

3. Process according to Claim 2, in which the isolation of the compound of the general formula I from the reaction mixture is accomplished by distillation, in, which case the compound of the general formula I is distilled over as distillate.

4. Process according to Claims 1 to 3, in which **x** assumes values from 1 to 3.

5. Process according to Claims 1 to 4, in which R¹ is a hydrogen atom, a C₁-C₁₂ alkyl radical, a C₆-C₁₂ aryl radical, a C₇-C₁₂ alkylaryl radical or a C₇-C₁₂ arylalkyl radical.

6. Process according to Claims 1 to 5, in which **R**² is a C₁-C₁₂ alkyl radical, a C₆-C₁₂ aryl radical, a C₇-C₁₂ alkylaryl radical or a C₇-C₁₂ arylalkyl radical, a C₁-C₁₂ alkoxy radical, a C₂-C₁₂ (alkoxy)alkoxy radical, a C₆-C₁₂ aryloxy radical, a C₇-C₁₂ arylalkoxy radical or a C₇-C₁₂ alkylaryloxy radical.

7. Process according to Claims 1 to 6, in which **R**³ is a C₁-C₁₂ alkyl radical, a C₆-C₁₂ aryl radical, a C₇-C₁₂ alkylaryl radical, a C₇-C₁₂ arylalkyl radical or a C₂-C₁₂ (alkoxy)alkyl radical.

8. Process according to Claims 1 to 7, in which the **R¹** radical is a hydrogen atom, a methyl group or an ethyl group, the R² radicals are each independently methyl, methoxy or ethoxy groups, the R³ radical is a methyl or ethyl group, n assumes integer values from 1 to 3 and x assumes integer values from 1 to 3.

9. Process according to Claims 1 to 8, in which the catalyst is selected from a metal or a compound of titanium, iron, cobalt, nickel, zinc, aluminum, tin, lead or bismuth.

10. Compound of the general formula IV 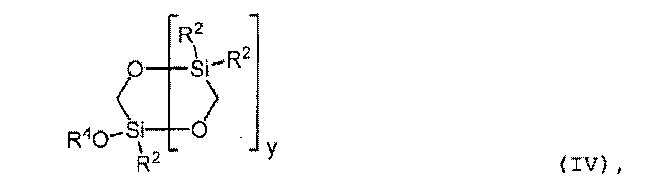 where
**y** represents integer values greater than or equal to 1,
**R²** is hydrogen or a hydrocarbyl radical which is unsubstituted or substituted by one or more **Q¹** groups and may be interrupted by one or more heteroatoms, or an **OR⁴** group,
**R⁴** is a hydrocarbyl radical which is unsubstituted or substituted by one or more **Q¹** groups and may be interrupted by one or more heteroatoms, or a **CH₂Si(R⁵)_{3-q}{OCH₂Si(R⁵)₃₋ᵣ[OCH₂Si(R⁵)₂(OR³]ᵣ}_{q}** group,
**q** represents integers selected from 0, 1, 2 and 3,
**r** represents integers selected from 0, 1, 2 and 3,
**R⁵** is hydrogen or a hydrocarbyl radical which is unsubstituted or substituted by one or more **Q¹** groups and may be interrupted by one or more heteroatoms, or an **OR³** group,
**R³** is a hydrocarbyl radical which is unsubstituted or substituted by one or more Q¹ groups and may be interrupted by one or more heteroatoms, and
Q¹ is a monovalent, divalent or trivalent heteroatom-containing radical,
where **R², R³, R⁴, R⁵** and **Q¹** may be joined to one another so as to form one or more rings.

## Revendications

1. Procédé pour la préparation de silaoxacycles de formule générale I, 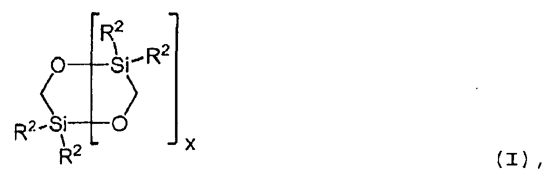 dans lequel des composés de formule générale II,
R¹-C(=O)-[O-CH₂-Si(R²)₂]ₙ-OR³ (II),
sont transformés en présence d'un catalyseur qui est choisi parmi un métal ou un composé d'un métal des groupes 3 à 15 et les lanthanides du système périodique des éléments selon la notation IUPAC,
x signifiant des valeurs entières supérieures ou égales à 0,
n signifiant des valeurs entières supérieures ou égales à 1,
R¹ signifiant hydrogène ou un radical hydrocarboné non substitué ou substitué par un ou plusieurs groupes Q¹, qui peut être interrompu par un ou plusieurs hétéroatomes, ou un groupe OR³,
R² signifiant hydrogène ou un radical hydrocarboné non substitué ou substitué par un ou plusieurs groupes Q¹, qui peut être interrompu par un ou plusieurs hétéroatomes, ou un groupe OR⁴,
R³ signifiant un radical hydrocarboné non substitué ou substitué par un ou plusieurs groupes Q¹, qui peut être interrompu par un ou plusieurs hétéroatomes,
R⁴ signifiant un radical hydrocarboné non substitué ou substitué par un ou plusieurs groupes Q¹, qui peut être interrompu par un ou plusieurs hétéroatomes, ou un groupe CH₂Si(R⁵)_{3-q}{OCH₂Si(R⁵)₃₋ᵣ [OCH₂Si(R⁵)₂(OR³)ᵣ}_{q},
q signifiant des valeurs entières choisies parmi 0, 1, 2 ou 3,
r signifiant des valeurs entières choisies parmi 0, 1, 2 ou 3,
R⁵ signifiant hydrogène ou un radical hydrocarboné non substitué ou substitué par un ou plusieurs groupes Q¹, qui peut être interrompu par un ou plusieurs hétéroatomes, ou un groupe OR³, et
Q¹ signifiant un radical monovalent, divalent ou trivalent, contenant des hétéroatomes,
R¹, R², R³, R⁴, R⁵ et Q¹ pouvant être liés les uns aux autres, de telle sorte qu'un ou plusieurs cycles se forment.

2. Procédé selon la revendication 1, dans lequel au moins un composé de formule générale I est isolé du mélange réactionnel.

3. Procédé selon la revendication 2, dans lequel l'isolement du composé de formule générale I du mélange réactionnel a lieu par distillation, le composé de formule générale I passant sous forme de distillat.

4. Procédé selon la revendication 1 à 3, x présentant des valeurs de 1 à 3.

5. Procédé selon la revendication 1 à 4, dans lequel R¹ représente un atome d'hydrogène, un radical C₁-C₁₂-alkyle, un radical C₆-C₁₂-aryle, un radical C₇-C₁₂-alkylaryle ou un radical C₇-C₁₂-arylalkyle.

6. Procédé selon la revendication 1 à 5, dans lequel R² représente un radical C₁-C₁₂-alkyle, un radical C₆-C₁₂-aryle, un radical C₇-C₁₂-alkylaryle ou un radical C₇-C₁₂-arylalkyle, un radical C₁-C₁₂-alcoxy, un radical C₂-C₁₂-(alcoxy)alcoxy, un radical C₆-C₁₂-aryloxy, un radical C₇-C₁₂-arylalcoxy ou un radical C₇-C₁₂-alkylaryloxy.

7. Procédé selon la revendication 1 à 6, dans lequel R³ représente un radical C₁-C₁₂-alkyle, un radical C₆-C₁₂-aryle, un radical C₇-C₁₂-alkylaryle, un radical C₇-C₁₂-arylalkyle ou un radical C₂-C₁₂-(alcoxy)alkyle.

8. Procédé selon la revendication 1 à 7, dans lequel le radical R¹ représente un atome d'hydrogène, un groupe méthyle ou un groupe éthyle, les radicaux R² représentent, indépendamment l'un de l'autre, des groupes méthyle, méthoxy ou éthoxy, le radical R³ représente un groupe méthyle ou éthyle, n présente des valeurs entières de 1 à 3 et x présente des valeurs entières de 1 à 3.

9. Procédé selon la revendication 1 à 8, dans lequel le catalyseur est choisi parmi un métal ou un composé du titane, du fer, du cobalt, du nickel, du zinc, de l'aluminium, de l'étain, du plomb ou du bismuth.

10. Composés de formule générale IV 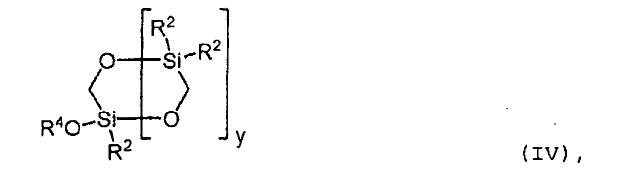 y signifiant des valeurs entières supérieures ou égales à 1,
R² signifiant hydrogène ou un radical hydrocarboné non substitué ou substitué par un ou plusieurs groupes Q¹, qui peut être interrompu par un ou plusieurs hétéroatomes, ou un groupe OR⁴, et
R⁴ signifiant un radical hydrocarboné non substitué ou substitué par un ou plusieurs groupes Q¹, qui peut être interrompu par un ou plusieurs hétéroatomes, ou un groupe CH₂Si(R⁵)_{3-q}{OCH₂Si(R⁵)₃₋ᵣ[OCH₂Si(R⁵)₂(OR³)]ᵣ}_{q},
q signifiant des valeurs entières choisies parmi 0, 1, 2 ou 3,
r signifiant des valeurs entières choisies parmi 0, 1, 2 ou 3,
R⁵ signifiant hydrogène ou un radical hydrocarboné non substitué ou substitué par un ou plusieurs groupes Q¹, qui peut être interrompu par un ou plusieurs hétéroatomes, ou un groupe OR³,
R³ signifiant un radical hydrocarboné non substitué ou substitué par un ou plusieurs groupes Q¹, qui peut être interrompu par un ou plusieurs hétéroatomes, et
Q¹ signifiant un radical monovalent, divalent ou trivalent, contenant des hétéroatomes,
R², R³, R⁴, R⁵ et Q¹ pouvant être liés les uns aux autres, de telle sorte qu'un ou plusieurs cycles se forment.
